(19) **Europäisches Patentamt / European Patent Office / Office européen des brevets**

(11) **EP 1 983 597 A1**

(12) **EUROPEAN PATENT APPLICATION**

published in accordance with Art. 158(3) EPC

(43) Date of publication:
**22.10.2008 Bulletin 2008/43**

(21) Application number: **07706260.2**

(22) Date of filing: **12.01.2007**

(51) Int Cl.:
*H01M 8/04* (2006.01)     *H01M 8/10* (2006.01)

(86) International application number:
**PCT/JP2007/000008**

(87) International publication number:
**WO 2007/083516 (26.07.2007 Gazette 2007/30)**

(84) Designated Contracting States:
**DE FR GB**

(30) Priority: **19.01.2006 JP 2006010601**

(71) Applicants:
- **Kabushiki Kaisha Toshiba**
  **Minato-ku,**
  **Tokyo 105-8001 (JP)**
- **Toyo Seikan Kaisha, Ltd.**
  **Tokyo 100-8522 (JP)**

(72) Inventors:
- **TAKAHASHI, Kenichi**
  **Tokyo 105-8001 (JP)**
- **HASEBE, Hiroyuki**
  **Tokyo 105-8001 (JP)**
- **KAWAMURA, Koichi**
  **Tokyo 105-8001 (JP)**

- **SHIMOYAMADA, Takashi**
  **Tokyo 105-8001 (JP)**
- **YASUI, Hideaki**
  **Tokyo 105-8001 (JP)**
- **YOSHIHIRO, Kenji**
  **Kanagawa 230-0001 (JP)**
- **YAMAMORI, You**
  **Kanagawa 230-0001 (JP)**
- **HAYASHI, Hiroaki**
  **Kanagawa 230-0001 (JP)**
- **IMODA, Daisuke**
  **Kanagawa 230-0001 (JP)**
- **KINOUCHI, Kouki**
  **KAnagawa 230-0001 (JP)**

(74) Representative: **Henkel, Feiler & Hänzel**
**Patentanwälte**
**Maximiliansplatz 21**
**80333 München (DE)**

(54) **FUEL CARTRIDGE FOR FUEL CELL, FUEL CELL, AND COUPLER**

(57) A nozzle part 9 provided in a fuel cartridge is inserted in a socket part 6 provided in a fuel cell body, and the nozzle part 9 and the socket part 6 are coupled. The nozzle part 9 has a nozzle head 12 provided on the cartridge body 8 and a valve mechanism arranged in this nozzle head 12. On a tip of the nozzle head 12, a spherical portion 15 is provided so as to detach from the socket part 6 without being interfered when a bending load is applied to the fuel cartridge 5 coupled to the fuel cell body.

FIG. 2

EP 1 983 597 A1

**Description**

Technical Field

The present invention relates to a fuel cartridge for a fuel cell and a fuel cell using the same, and a coupler used as a coupling mechanism and the like of the fuel cartridge and the fuel cell.

Background Art

To make various portable electronic apparatuses such as laptop computers and mobile phones usable for a long period of time without charging, it is attempted to use fuel cells for power supply of portable electronic apparatuses. Fuel cells are capable of generating electric power just by supplying fuel and air, and have a characteristic of generating electric power continuously for a long period of time by supplying fuel. Accordingly, if a fuel cell can be miniaturized, it can be considered as a system of great advantage as power supply for a portable electronic apparatus.

Since direct methanol fuel cells (DMFC) using methanol fuel which has high energy density are capable of being miniaturized and are also simple in handling of fuel, they are hopefully expected as power supply for portable apparatuses. As a method of supplying liquid fuel in a DMFC, there are known active methods such as gas supply type and liquid supply type, and a passive method such as an internal vaporization type inwhich liquid fuel in a fuel containing unit is vaporized inside the fuel cell and then supplied to a fuel anode. The passive method is advantageous for miniaturization of DMFCs.

In the passive type DMFC such as the internal vaporization type, liquid fuel in the fuel containing unit is vaporized via a fuel impregnation layer, a fuel vaporization layer, and so on for example and vaporized components of the liquid fuel are supplied to the fuel anode (for example, referred to Patent Reference 1 and 2). To the fuel containing unit, liquid fuel is supplied using a fuel cartridge. In a satellite type (external injection type) fuel cartridge, a coupler constituted of a nozzle and a socket each having a valve mechanism inside is used for performing cutting off and injecting of liquid fuel (refer to Patent Reference 3 for example).

Fuel cells such as passive-type DMFCs are currently miniaturized, and consequently, a fuel supply hole (socket) on the fuel cell side and a fuel injection hole (nozzle) on the fuel cartridge side tend to be reduced in diameter. When such a nozzle and a socket are coupled to inject liquid fuel from the fuel cartridge to the fuel containing unit of the fuel cell, the nozzle reduced in diameter may be damaged when a force such as a bending load is applied to the fuel cartridge.

Since the fuel cartridge blocks liquid fuel by a valve mechanism included in the nozzle, damage to the nozzle may cause leakage of liquid fuel contained in the fuel cartridge. The valve mechanism itself may not be damaged when the nozzle is damaged, but a component part of the valve mechanism may project and thereby generate a risk of leakage of liquid fuel by accidental operation of the valve mechanism. The risk of damaging the nozzle increases as the diameter thereof is reduced.

Conventionally, to simplify coupling of containers with each other and replacing of containers, various types of attachable/detachable couplers are used. For example, Patent Reference 4 discloses a coupling device constituted of a plug including a main channel and a sub-channel, and a socket including a main channel and a sub-channel and becoming communicable with the main channel and the sub-channel of the plug when engaged with the plug.

In such a coupling device, the socket has a main channel formed on an outer periphery of a valve pressing body fixed to a holder, a sub-channel formed outside the main channel, and valves closing these channels. Each valve is constructed to be pressed against a valve sheet by a biasing force of a spring so as to close the main channel and the sub-channel. The plug has a main channel formed on an outer periphery of a valve body which is held slidably by a valve holder, a sub-channel formed outside the main channel, and valves respectively closing these channels. Each valve is constructed to be pressed against a valve sheet by a biasing force of a spring so as to close the main channel and the sub-channel.

When the socket and the plug are coupled, first a sub-valve of the socket and a sub-valve of the plug come in contact with each other, and they move in directions to apart from each other against the respective biasing forces, thereby the sub-channels become communicable. Further, a main valve of the socket is pushed by an end face in an internal cylinder of the plug and moves back against the spring, and then a valve element moves away from a valve sheet of the valve pressing body, thereby opening the main channel. At the same time, a tip portion flat surface of the valve pressing body on the socket side and a flat surface of a valve member provided on the valve body on the plug side come in contact with each other to press the valve body on the plug side against the biasing force of the spring, the valve body is moved back to open the main valve on the plug side, and thereby the main channels become communicable.

When the sub-channels become communicable, air is supplied from an air supply source to the inside of the container, an air pressure thereof contracts an inner bag, and liquid in the inner bag is delivered from the main channel on the plug side via the main channel on the socket side to the outside of the container. When such a coupling device is used as a coupler for supplying fuel to a fuel cell for example, if a coupling state is made once, this coupling state is maintained unless a release operation is performed. Accordingly, there is a problem that the coupler and/or an apparatus body are damaged when an excessive force surpassing a normal range is applied when being in the coupling state.

Patent Reference 1: JP-B2 3413111 (Patent Publication)
Patent Reference 2: JP-A 2004-171844 (KOKAI)
Patent Reference 3: JP-A 2004-127824 (KOKAI)
Patent Reference 4: JP-A 2003-172487 (KOKAI)

Disclosure of the Invention

An object of the present invention is to provide a fuel cartridge for a fuel cell which suppresses occurrence of a problem due to damage to a nozzle part of the fuel cartridge, and a fuel cell to which such a fuel cartridge is applied. Another object of the present invention is to provide a coupler capable of suppressing damage to the coupler itself and/or an apparatus bodywhen an excessive force is applied.

A fuel cartridge for a fuel cell according to an aspect of the present invention is characterized by including: a cartridge body containing liquid fuel for the fuel cell; and a nozzle part having a nozzle head provided on the cartridge body and a valve mechanism arranged in the nozzle head, the nozzle part supplying the liquid fuel to a fuel cell body, in which the nozzle head has a spherical portion provided in a tip of an insertion portion which is inserted in a socket part of the fuel cell body.

A fuel cell according to an aspect of the present invention is characterized by including: the fuel cartridge according to the aspect of the present invention; and a fuel cell body including a fuel containing unit having a socket part coupled detachably to the nozzle part of the fuel cartridge, the socket part having a valve mechanism inside, and an electromotive unit supplied with the liquid fuel from the fuel containing unit to generate electric power.

A coupler according to an aspect of the present invention is characterized by including: a socket having a first valve element and a first biasing member biasing the first valve element in a closing direction; and a plug having a second valve element and a second biasing member biasing the second valve element in a closing direction, the plug engaged with and coupled to the socket detachably, in which the first and second valve elements are released and brought into communication in a state that the socket and the plug are engaged with and coupled to each other; and inwhich in a state that a projecting coupling portion of the plug is coupled to a plug coupling hole of the socket, at least one of the socket and the plug can be slanted and removed with the projecting coupling portion of the plug being located within an interference prevention space, which is a space formed by rotating a virtual circle about the plug, the virtual circle having a center at an outermost peripheral point on a coupling surface of the projecting coupling portion of the plug and a radius from the center to an intersection point of a lower end circumference of the plug coupling hole of the socket and a diagonal position of the center.

A coupler according to another aspect of the present invention is characterized by including: a socket having a first valve element and a first biasing member biasing the first valve element in a closing direction; and a plug having a second valve element and a second biasing member biasing the second valve element in a closing direction, the plug engaged with and coupled to the socket detachably, in which the first and second valve elements are released and brought into communication in a state that the socket and the plug are engaged with and coupled to each other; and in which a narrow portion is formed in the plug, and in a state that a projecting coupling portion of the plug is coupled to a plug coupling hole of the socket, when at least one of the socket and the plug is slanted about an outermost peripheral point on a coupling surface of the projecting coupling portion of the plug, the narrow portion prevents interference with an internal cylinder lower end of the plug coupling hole of the socket, the internal cylinder lower end projecting toward the plug side further than the coupling surface, and at least one of the socket and the plug can be slanted and removed.

Brief Description of Drawings

[FIG. 1] FIG. 1 is a view showing the structure of a fuel cell according to an embodiment of the present invention.
[FIG. 2] FIG. 2 is a view showing structures (in a non-coupling state) of a nozzle part of a fuel cartridge and a socket part of a fuel cell body in the fuel cell shown in FIG. 1 with partial cross-sections.
[FIG. 3] FIG. 3 is a view showing a coupling state of the nozzle part and the socket part shown in FIG. 2 with a partial cross-section.
[FIG. 4] FIG. 4 is a perspective view showing a nozzle head of the nozzle part shown in FIG. 2 in magnification.
[FIG. 5] FIG. 5 is a top view of the nozzle head shown in FIG. 4.
[FIG. 6] FIG. 6 is a front view of the nozzle head shown in FIG. 4.

[FIG. 7] FIG. 7 is a cross-sectional view taken along the A-A line of the nozzle head shown in FIG. 5.

[FIG. 8] FIG. 8 is a cross-sectional view taken along the B-B line of the nozzle head shown in FIG. 5.

[FIG. 9] FIG. 9 is a cross-sectional view showing the structure of a rubber holder of a socket part shown in FIG. 2.

[FIG. 10] FIG. 10 is a cross-sectional view showing an example of a seal by means of the nozzle head of the nozzle part shown in FIG. 2 and a rubber holder of the socket part.

[FIG. 11] FIG. 11 is a perspective view showing a spring retention of the socket part shown in FIG. 2 in enlargement.

[FIG. 12] FIG. 12 is a perspective view showing a state that the spring retention shown in FIG. 11 is attached to a socket body of the socket part.

[FIG. 13] FIG. 13 is a view showing a state that the nozzle part slants and detaches from the socket part.

[FIG. 14] FIG. 14 is a view showing a circle part of FIG. 13 in enlargement.

[FIG. 15] FIG. 15 is a view for explaining another example of a detachment state of the nozzle part from the socket part by slanting, the view showing a state that the nozzle part is coupled to the socket part.

[FIG. 16] FIG. 16 is a view showing a state that the nozzle part shown in FIG. 15 slants.

[FIG. 17] FIG. 17 is a view showing a state that the nozzle part shown in FIG. 16 slants further.

[FIG. 18] FIG. 18 is a view showing a state that the nozzle part shown in FIG. 17 detaches from the socket part.

[FIG. 19] FIG. 19 is a view for explaining release of a connection state of the nozzle part and the socket part by an excessive rotational force, the view showing a state that cam portions and cam follower portions are engaged.

[FIG. 20] FIG. 20 is a view showing a state that the cam portions shown in FIG. 19 move up while rotating along the cam follower portions.

[FIG. 21] FIG. 21 is a view showing a state that the cam portions shown in FIG. 20 further move up while rotating along the cam follower portions.

[FIG. 22] FIG. 22 is a view showing a state that the coupling state of the cam portions and the cam follower portions shown in FIG. 21 is released.

[FIG. 23] FIG. 23 is a cross-sectional view showing a structural example of an internal vaporization type DMFC as an example of the fuel cell body in the fuel cell shown in FIG. 1.

[FIG. 24] FIG. 24 is a plan view showing a structure of a plug of a coupler according to the embodiment of the present invention.

[FIG. 25] FIG. 25 is a front view of the plug shown in FIG. 24. [FIG. 26] FIG. 26 is a side view of the plug shown in FIG. 24.

[FIG. 27] FIG. 27 is an A-O-B cross-sectional view of the plug shown in FIG. 24.

[FIG. 28] FIG. 28 is a cross-sectional view showing a part of the coupler shown in FIG. 24 in enlargement.

[FIG. 29] FIG. 29 is a cross-sectional view showing a modification example of the coupler shown in FIG. 28.

[FIG. 30] FIG. 30 is a cross-sectional view showing another modification example of the coupler shown in FIG. 28.

[FIG. 31] FIG. 31 is a cross-sectional view showing still another modification example of the coupler shown in FIG. 28.

[FIG. 32] FIG. 32 is a plan view showing the structure of a plug of a coupler according to still another embodiment of the present invention.

[FIG. 33] FIG. 33 is a front view of the plug shown in FIG. 32. [FIG. 34] FIG. 34 is a side view of the plug shown in FIG. 32.

[FIG. 35] FIG. 35 is an A-O-B cross-sectional view of the plug shown in FIG. 32.

[FIG. 36] FIG. 36 is a cross-sectional view showing the structure of a coupler according to yet another embodiment of the present invention.

Explanation of Numerals and Symbols

1 ... fuel cell; 2 ... fuel cell unit; 3 ... fuel containing unit; 4 ... fuel cell body; 5 ... fuel cartridge; 6 ... socket part (female side coupler/socket); 8 ... cartridge body; 9 ... nozzle part (male side coupler/plug); 11 ... nozzle hole; 12 ... nozzle head; 14 ... insertion portion; 15 ... spherical portion; 16 ... narrowportion; 17 ... camportion; 18 ... groove; 19 ... valve holder; 20, 35 ... valve; 20a, 35a ... valve head; 20b, 35b ... valve stem; 21,36 ... valve sheet; 22, 37 ... O-ring; 23, 38 ... compression spring; 31 ... socket body; 32 ... rubber holder; 33 ... cam follower portion; 34 ... spring retention; 70 ... coupler; P70 ... plug; S70 ... socket; 72 ... socket body; 76 ... plugbody; 76c ... projecting coupling portion; 76e ... coupling surface; 77 ... narrow portion; 80 ... coupling retention member; 90 ... release member; 91 ... cam portion; 92 ... cam follower portion.

Best Mode for Carrying out the Invention

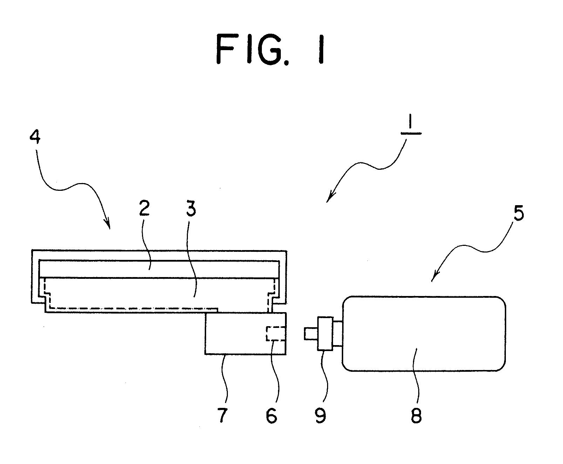

Hereinafter, embodiments of the present invention will be described with reference to the drawings. FIG. 1 is a view showing the structure of a fuel cell according to an embodiment of the present invention. The fuel cell 1 shown in FIG. 1 includes a fuel cell body 4 constituted mainly of a fuel cell unit 2 to be an electromotive unit and a fuel containing unit 3, and a satellite type fuel cartridge 5 supplying liquid fuel to the fuel containing unit 3.

The fuel cell body 4 has the fuel containing unit 3 containing liquid fuel. The fuel containing unit 3 is supplied with liquid fuel by the fuel cartridge 5. On a bottom surface side of the fuel containing unit 3, a fuel supply unit 7 is provided having a socket part 6 to be a supply port of liquid fuel. The socket part 6 includes a valve mechanism and is in a closed state other than when being supplied with liquid fuel.

The fuel cartridge 5 has a cartridge body (container) 8 containing liquid fuel for the fuel cell. On a tip of the cartridge body 8, a nozzle part 9 is provided to be a fuel injection port when supplying the liquid fuel contained therein to the fuel cell body 4. The nozzle part 9 includes a valve mechanism and is kept in a closed state other than when supplying the liquid fuel. The fuel cartridge 5 is coupled to the fuel cell body 4 only when injecting the liquid fuel into the fuel containing unit 3.

In the cartridge body 8 of the fuel cartridge 5, liquid fuel corresponding to the fuel cell body 4 is contained. When the fuel cell body 4 is a direct methanol fuel cell (DFMC), methanol fuel such as methanol solutions with various concentrations, pure methanol, and the like are used as the liquid fuel. The liquid fuel contained in the cartridge body 8 is not limited to methanol fuel and may be liquid fuel of, for example, ethanol fuel such as ethanol solution and pure ethanol, propanol fuel such as propanol solution and pure propanol, glycol fuel such as glycol solution and pure glycol, dimethyl ether, formic acid, and the like.

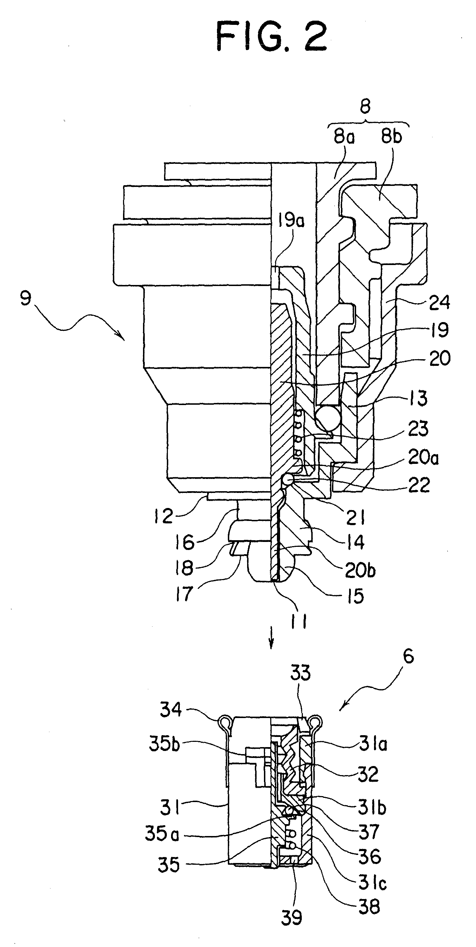

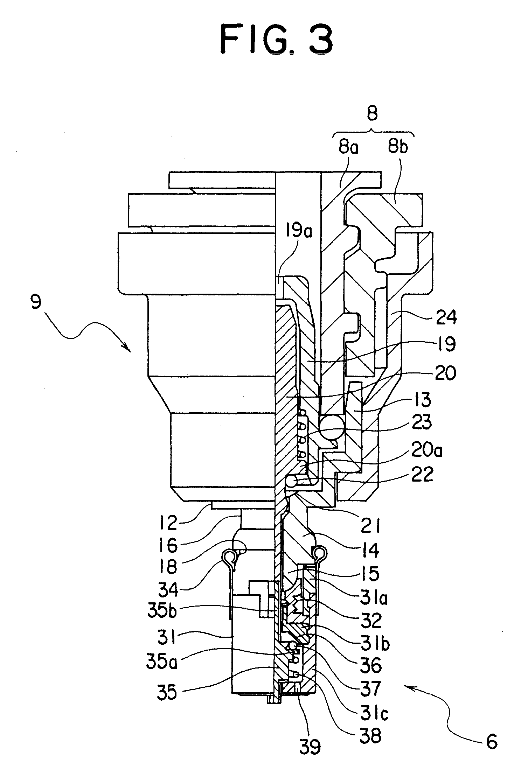

The socket part 6 provided on the fuel containing unit 3 of the fuel cell body 4 and the nozzle part 9 provided on the cartridge body 8 of the fuel cartridge 5 constitute a pair of coupling mechanisms (coupler). A specific structure of the coupler constituted of the socket part 6 and the nozzle part 9 will be described with reference to FIG. 2 and FIG. 3. FIG. 2 shows a state before coupling the nozzle part 9 of the fuel cartridge 5 and the socket part 6 of the fuel cell body 4, FIG.3 shows a state after the nozzle part 9 and the socket part 6 are coupled. FIG. 2 and FIG. 3 are views mainly showing structures of the nozzle part 9 and the socket part 6 with partial cross-sections.

In the coupler coupling the fuel cell body 4 and the fuel cartridge 5, the nozzle part (male side coupler/plug) 9 as a cartridge side coupling mechanism has a nozzle head 12 in which a nozzle hole 11 is opened on a tip side. The nozzle head 12 has a base portion 13 to be fixed to a tip opening part of the cartridge body 8 and an insertion portion 14 to be inserted to the socket part 6. The insertion portion 14 in a cylindrical shape is formed projecting from the base portion 13 so that an axial direction thereof is in parallel to an insertion direction of the nozzle part 9.

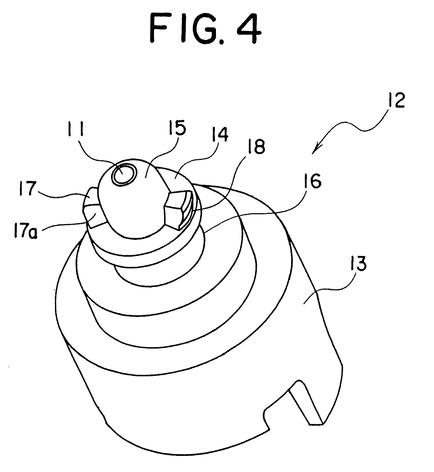

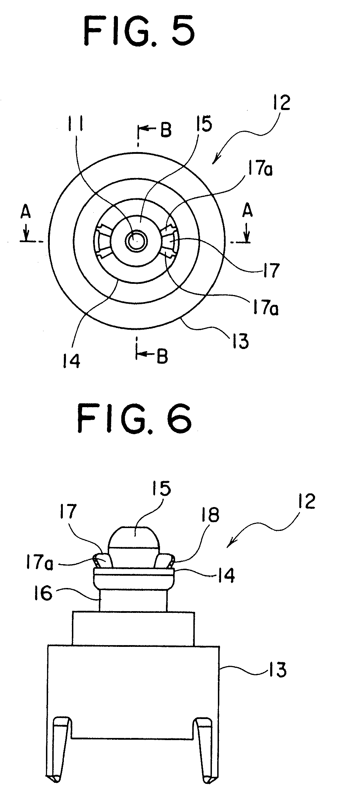

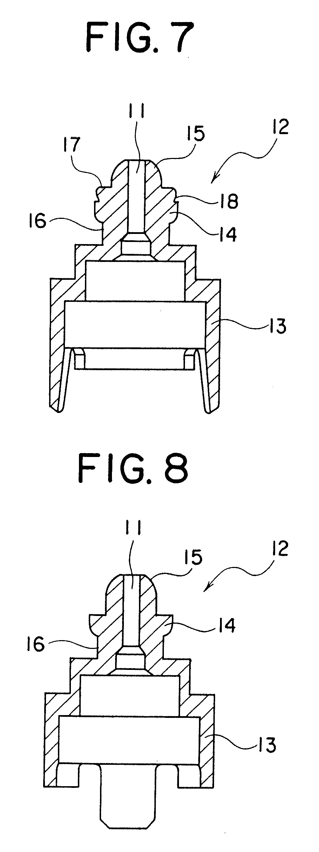

On a tip of the insertion portion 14 of the nozzle head 12, a spherical part 15 is provided as shown in FIG. 4 to FIG. 8. The nozzle hole 11 opens in a tip of the spherical portion 15. The spherical portion 15 mentioned here refers to a portion having a spherical surface, and is not necessarily be a perfect sphere. Further, the spherical portion 15 may have the spherical surface partially, and for example may be a shape combined with a partial spherical surface having a certain curvature. The spherical portion 15 in this embodiment has a substantially half sphere shape, and the spherical portion 15 having such a substantially half sphere shape is provided on the tip of the insertion portion 14.

The spherical portion 15 makes the nozzle part 9 easily removable from the socket part 6 when an excessive bending load or the like is applied to the fuel cartridge 5. Specifically, when the nozzle part 9 is slanted and removed from the socket part 6, the spherical portion 15 suppresses interference by the socket part 6. Further, a narrow portion 16 is provided on a root side of the insertion portion 14 of the nozzle head 12. The narrow portion 16 shortens a distance of the nozzle part 9 to be interfered by the socket part 6 when the nozzle part 9 is slanted and removed from the socket part 6. Thus, when the radius of curvature of the spherical surface constituting the spherical portion 15 is larger than the interfered distance, the nozzle part 9 can be made easily removable. Specific shapes of the spherical portion 15 and the narrow portion 16 will be described later in detail.

On an outer periphery of the insertion portion 14 of the nozzle head 12, cam portions 17 are provided as members for releasing the coupling state of the nozzle part 9 and the socket part 6 when an excessive rotational force is applied to the fuel cartridge 5. The cam portions 17 are formed on a root side of the spherical portion 15, and provided at positions one step down from the tip of the spherical portion 15. The cam portions 17 each have a cam surface 17a sloping in an outer peripheral (circumferential) direction of the spherical portion 15. The cam portions 17 are each constituted of a cam surface 17a having sloping surfaces projecting upward with respect to the circumferential direction of the insertion portion 14 (spherical portion 15) on both sides respectively in the circumferential direction. The cam portions 17 are provided respectively at several positions (two positions in FIG. 4 to FIG. 8) in the circumferential direction of the insertion portion 14.

As described above, the cam portions 17 are provided to extend outward in a radial direction with respect to a root portion of the spherical portion 15. In other words, the spherical portion 15 projects further than the cam portions 17. Therefore, when viewing the entire insertion portion 14 of the nozzle head 12, the spherical portion 15 is in a state of projecting from a base portion side of the insertion portion 14 having the cam portions 17. Accordingly, the spherical portion 15 provided on the tip of the insertion portion 14 functions as a substantial insertion portion to the socket part 6. Further, in a side surface (corresponding to an outer peripheral surface of the insertion portion 14) of each of the cam portions 17, grooves 18 with which a spring retention (described later) as a coupling retention member for the nozzle part 9 and the socket part 6 engages are formed.

A valve holder 19 in a cup shape is arranged inside the base portion 13 of the nozzle head 12. The valve holder 19 defines a valve chamber, and a tip side outer edge portion thereof is sandwiched and fixed between the cartridge body 8 and the base portion 13. A valve 20 is arranged in the valve holder 19. The valve 20 includes a valve head 20a and a valve stem 20b. The valve head 20a is arranged in the valve chamber defined by the valve holder 19. The valve stem 20b is housed in the insertion portion 14.

The valve 20 having the valve head 20a and the valve stem 20b is constructed to be capable of moving back and forth in the axial direction (insertion direction of the nozzle part 9). An O-ring 22 is arranged between the valve head 20a and a valve sheet 21 formed inside the base portion 13. To the valve 20, a force to press the valve head 20a against the valve sheet 21 is applied by elastic members such as a compression spring 23 and so forth, and the O-ring 22 is pressed by them.

Since the elastic members such as the compression spring 23 and so forth are exposed to the liquid fuel passing through the nozzle part 9, it is preferable that the elastic members are formed of a material having excellent corrosion resistance and the like. It is desirable to use a metal spring (for example a spring constituted of a spring steel) subjected to passivation processing, gold coating or the like for the compression spring 23. For these elastic member, O-ring 22, and so on, an elastic member, which is constituted of an elastomer having compression set in the range of 1 to 80 and hardness (type A) in the range of 40 to 70, which will be described later, and limit in operating hours of 10000 or longer in a performance test of the fuel cell, is also effective for assuring a sealing property and the like when engaged or in use.

In a normal state (state that the fuel cartridge 5 is separated from the fuel cell body 4), the valve head 20a is pressed against the valve sheet 21 via the O-ring 22, thereby making a channel in the nozzle part 9 in a closed state. On the other hand, when the fuel cartridge 5 is coupled to the fuel cell body 4 as will be described later, the valve stem 20b moves back and the valve head 20a moves away from the valve sheet 21, thereby turning the channel in the nozzle part 9 to an open state. A communication hole 19a is provided in a bottom portion of the valve holder 19, and through this communication hole 19a as a passage for liquid fuel, the liquid fuel in the cartridge body 8 flows into the nozzle part 9.

Further, a container nozzle 24 is arranged outside the nozzle head 12. By attaching the container nozzle 24 to the cartridge body 8 by screwing for example, the nozzle part 9 having the nozzle head 12, the valve 20, and so on is fixed to the tip portion (tip portion having an opening) of the cartridge body 8. FIG. 2 and FIG. 3 show the cartridge body 8 having a multilayer structure, in which 8a denotes an internal container to be in direct contact with liquid fuel such as methanol fuel, and 8b denotes an external container (hard case) protecting the internal container 8a.

The socket part (female side coupler/socket) 6 as a fuel cell side coupling mechanism has a socket body 31 in a cylindrical shape. The socket body 31 has an upper body portion 31a, a middle body portion 31b, and a lower body portion 31c, which are integrated and embedded in the fuel supply unit 7 (not shown in FIG. 2 and FIG. 3) of the fuel cell body 4. On the middle body portion 31b of the socket body 31, a rubber holder 32 as an elastic body holder is disposed. The rubber holder 32 is given elasticity in an axial direction based on a bellows shape and a material characteristic (rubber elasticity). The rubber holder 32 is a seal member forming a seal with the insertion portion 14 (specifically the spherical portion 15) of the nozzle head 12, and the inside thereof is a passage for liquid fuel.

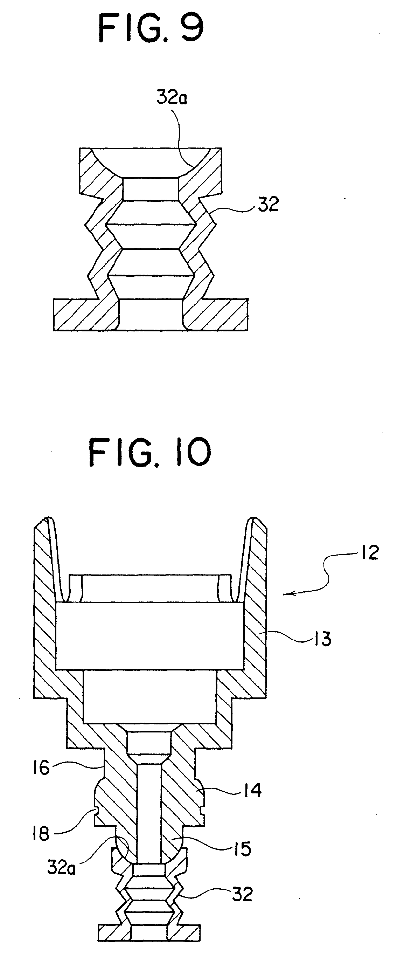

As shown in FIG. 9, the rubber holder 32 has a cylindrical shape forming a bellows which contracts in an axial direction, and the inside thereof is a channel for liquid fuel. Further, on a tip portion of the rubber holder 32, a curved-surface recess portion 32a which contacts the spherical portion 15 provided on the tip of the insertion portion 14 of the nozzle head 12 is provided. The curved-surface recess portion 32a constitutes a receiving portion for the spherical portion 15. As shown in FIG. 10, by engaging the spherical portion 15 with the curved-surface recess portion 32a, a seal is formed between the rubber holder 32 and the insertion portion 14 (spherical portion 15). An actual seal may be either a surface seal by the spherical surface constituting the spherical portion 15 and the curved-surface recess portion 32a or a line seal in a case where their radii of curvature are changed.

Since the rubber holder (elastic member) 32 is exposed to the liquid fuel passing through the socket part 6, it is preferable that the rubber holder is formed of a material having excellent methanol resistance and the like. Specifically, it is preferable to be formed of an elastomer having compression set in the range of 1 to 80 and hardness (type A) in the range of 40 to 70, and limit in operating hours of 10000 or longer in a performance test of the fuel cell. Specific examples of the elastomer include a peroxide-crosslinked ethylene/propylene/diene copolymer, dynamically crosslinked olefin thermoplastic elastomer, crystalline pseudo-crosslinked olefin thermoplastic elastomer, and the like. Such elastic members may also be used instead of the spring or the like of the valve mechanisms.

By setting the compression set of the elastomer in the range of 1 to 80 so as to give a specific resilience, it is possible to attain a sufficient sealing property of the cartridge for the fuel cell, the fuel cell, or the coupler while in use. By setting the hardness (type A) of the elastomer in the range of 40 to 70, deformation of the cartridge for the fuel cell, the fuel cell, or the coupler when coupled during production can be prevented, and it is possible to attain a sufficient sealing property.

The compression set is a value such that a distortion amount of elastomer is measured after processing with 25% distortion at 70°C for 24 hours in accordance with JIS K6262 "Method of testing compression set of vulcanized rubber and thermoplastic rubber." The hardness (type A) is a value measured by a method in accordance with JIS K6253 "Method of testing hardness of vulcanized rubber and thermoplastic rubber (durometer type A)."

The performance test of the fuel cell is carried out with "power generating cell output density: 37.5 mW/cm$^2$;

anode: (standard solution) 5 vol% MeOH 0.1 cc/min/cm$^2$; cathode: air 32 cc/min/cm$^2$; temperature: 30°C." The cell is subjected to aging and used for the test after it is confirmed that electromotive voltage of 0.375 V with current density of 100 mA/cm$^2$ can be attained. The MeOH is prepared using purified pure water that shows an electric resistance value larger than 18 MΩ·cm and using methanol (super high-grade) made by Wako Pure Chemical and Milli-Q (Ultrapure Organic Cartridge). The test procedure is as follows.

In the cartridge with interior content of 50 cc, 0.03 g of finely cut pieces of elastomer are immersed in 25 cc of the methanol (super high-grade). The cartridge is sealed with a cap including a gasket made of tetrafluoroethylene and stored at 60°C for one week. Thereafter, a methanol solution prepared to be 5 vol% using the Milli-Q is used as a test solution. Using the standard solution as fuel, it is confirmed that the electromotive voltage of 0.375 V or larger can be attained, and generated electromotive power is taken as initial electromotive voltage (V0). Subsequently, as the fuel is switched to the test solution to conduct the test, the electromotive voltage (V1) decreases over time. Then, the time of test by which the degree of decrease in electromotive voltage [(V1 - V0)/V0 × 100] becomes 3% is taken as limit in operating hours (T).

On an upper surface of the upper body portion 31a of the socket body 31, there are formed cam follower portions 33 corresponding to the cam portions 17 provided on the outer periphery of the insertion portion 14 of the nozzle head 12. The cam follower portions 33 are formed as trenches corresponding to the projecting shapes of the cam portions 17. The cam follower portions 33 are constructed so as not to contact the cam portions 17 until the socket part 6 and the nozzle part 9 are coupled. The cam portions 17 and the cam follower portions 33 have paired shapes, and thus it is possible to prevent mistaken injection of liquid fuel or the like by defining the shapes according to the liquid fuel for example.

Specifically, the shapes of the cam portions 17 and the cam follower portions 33 are made respectively in shapes corresponding to specific liquid fuel. In other words, by changing the shapes of the cam portions 17 and the cam follower portions 33 according to the type, concentration and so on of the liquid fuel, it becomes possible that the cam portions 17 and the cam follower portions 33 engage only when the nozzle part 9 of the fuel cartridge 5 containing liquid fuel corresponding to the fuel cell body 4 is coupled to the socket part 6 of the fuel containing unit 3. Accordingly, only the liquid fuel corresponding to the fuel cell body 4 is supplied, which makes it possible to prevent operation failure, decrease in characteristics and/or the like due to mistaken injection of liquid fuel.

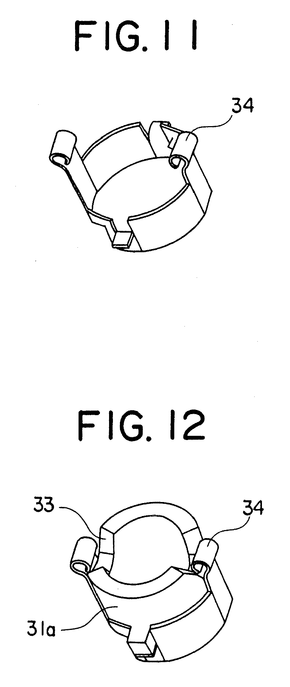

Further, a spring retention 34 which functions as a coupling retention member for the nozzle part 9 and the socket part 6 is attached on the upper body portion 31a of the socket body 31 as shown in FIG. 11 and FIG. 12. The spring retention 34 has a spring force (restoring force) inward in the axial direction of the socket part 6, and engages with the grooves 18 provided in the outer peripheral surface of the insertion portion 14 by this restoring force. Thereby, the coupling state of the nozzle part 9 and the socket part 6 is retained. The spring retention 34 is constructed to engage with the grooves 18 at several positions. Releasing of coupling by the cam portions 17 and the cam follower portions 33 and retaining of coupling by the spring retention 34 are described later.

A valve 35 is arranged in the socket body 31. The valve 35 has a valve head 35a and a valve stem 35b. The valve head 35a is arranged in a valve chamber defined by the middle body portion 31b and the lower body portion 31c. The valve stem 35b is housed in the rubber holder 32. The valve 35 as such is constructed to be capable of moving back and forth in the axial direction (insertion direction of the nozzle part 9). An O-ring 37 is arranged between the valve head 35a and a valve sheet 36 formed on a lower surface side of the middle body portion 31b.

A force to press the valve head 35a against the valve sheet 36 is applied constantly to the valve 35 by elastic members such as a compression spring 38 and so forth, and the O-ring 37 is pressed by them. In a normal state (state that the fuel cartridge 5 is separated from the fuel cell body 4), the valve head 35a is pressed against the valve sheet 36 via the O-ring 37, thereby making a channel in the socket part 6 in a closed state. When the fuel cartridge 5 is coupled to the fuel cell body 4, the valve stem 35b moves back and the valve head 35a moves away from the valve sheet 36, thereby making the channel in the socket part 6 in an open state.

A communication hole 39 connected to the fuel containing unit 3 via the fuel supply unit 7 is provided in the lower body portion 31c of the socket body 31. Thus, in the socket part 6, a channel provided in the socket body 31 is connected to the fuel containing unit 3 via the communication hole 39 provided in the lower body portion 31c. By opening the channels in the nozzle part 9 and the socket part 6 by turning the valves 20, 35 to open states, the liquid fuel contained in the fuel cartridge 5 can be injected into the fuel containing unit 3 via the nozzle part 9 and the socket part 6.

When supplying the liquid fuel contained in the fuel cartridge 5 to the fuel containing unit 3 of the fuel cell body 4, the nozzle part 9 of the fuel cartridge 5 is inserted in and coupled to the socket part 6. When the nozzle part 9 is inserted in the socket part 6, first the spherical portion 15 provided in the tip of the insertion portion 14 of the nozzle head 12 contacts the curved-surface recess portion 32a provided on a tip side of the rubber holder 32 , thereby establishing a seal on the periphery of the channels before the valves turn to open states. The seal between the spherical portion 15 and the rubber holder 32 is as described above.

When the nozzle part 9 is inserted in the socket part 6 from the state that the spherical portion 15 of the nozzle head 12 and the rubber holder 32 are in contact, tips of the valve stem 20b of the nozzle part 9 and the valve stem 35b of the socket part 6 butt into each other. When the nozzle part 9 is inserted further in the socket part 6 from this state, the valve 35 of the socket part 6 moves back to completely release the channel thereof, and thereafter the valve 20 of the nozzle part 9 moves back, thereby establishing a fuel channel. At the same time as this establishing of the fuel channel, the spring retention 34 of the socket part 6 engages with the grooves 18 provided in the outer peripheral surface of the insertion portion 14 of the nozzle head 12, thereby retaining the coupling state of the nozzle part 9 and the socket part 6.

In this manner, by coupling the nozzle part 9 and the socket part 6 and turning the valve mechanisms provided therein to open states respectively so as to open the fuel channel, the liquid fuel contained in the fuel cartridge 5 can be supplied to the fuel containing unit 3 of the fuel cell body 4. Now, to further increase the safety and reliability of the fuel cartridge 5 and the fuel cell 1 using the fuel cartridge 5, it is needed to make the nozzle part 9 easily detachable from the socket part 6 when an excessive bending load, rotational force, or the like is applied to the fuel cartridge 5 coupled to the fuel containing unit 3.

In the case that an excessive bending load is applied to the fuel cartridge 5, particularly the nozzle part 9 can be damaged easily. Specifically, the nozzle part 9 of the fuel cartridge 5 tends to be decreased in diameter along with miniaturization of the fuel cell body 4. The nozzle part 9 with a decreased diameter may be damaged when a bending load (force in a direction having an angle to the insertion direction of the fuel cartridge 5) is applied to the fuel cartridge 5. Specifically, it is highly possible that the insertion portion 14 projecting from the base portion 13 of the nozzle head 12 breaks off. The risk of breakage of the nozzle part 9 increases as the decrease in diameter proceeds, and further the nozzle part 9 becomes easily breakable when it is formed of a material having poor toughness against a bending load, such as super engineering plastic, general-purpose engineering plastic, or the like.

For example, since the nozzle head 12 and the valve 20 of the nozzle part 9 directly contact methanol fuel or the like, it is preferable that constituting materials thereof have methanol resistance. Examples of such materials include general-purpose engineering plastics such as polyethylene terephthalate (PET), polybutylene terephthalate (PBT), polyacetal (POM), and the like, and super engineering plastics such as polyphenylene sulfide (PPS), polyetheretherketone (PEEK), liquid crystal polymer (LCP), and the like. Since they have poor toughness, they may be broken when a bending load is applied.

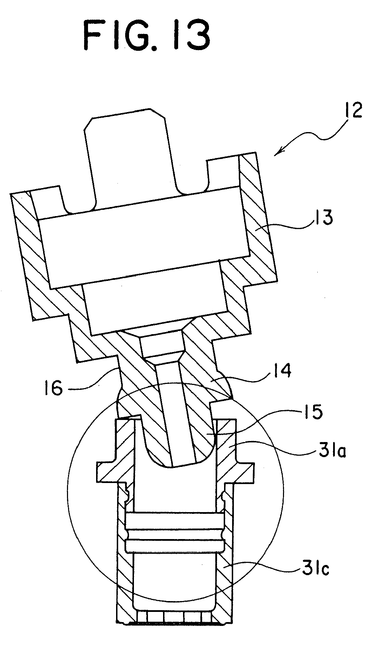

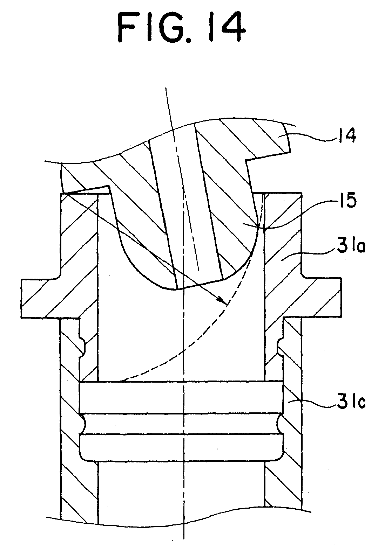

Regarding the bending load, the spherical portion 15 is provided on the tip portion, which functions as a substantial insertion portion of the insertion portion 14 as described above. Specifically, as shown in FIG. 13 and FIG. 14, the spherical portion 15 has a spherical surface with a curvature equal to or smaller than a virtual circle, which has a center at a position on the nozzle part 9 (specifically the insertion portion 14) to contact the socket part 6 when a bending load is applied to the fuel cartridge 5, and a radius from the center to a nearest position (a tip inside corner of the upper body portion 31a of the socket body 31 in FIG. 13) on the socket part 6 to interfere in detachment of the nozzle part 9 (insertion portion 14). Accordingly, when an excessive bending load is applied to the fuel cartridge 5, the nozzle part 9 can be slanted and removed without being interfered by the socket part 6.

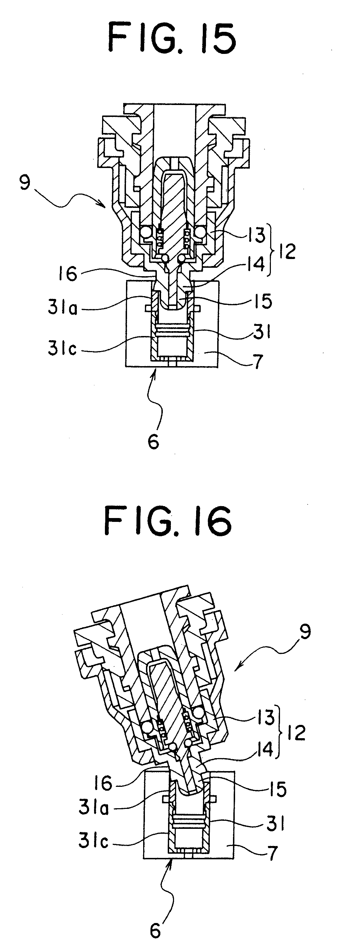

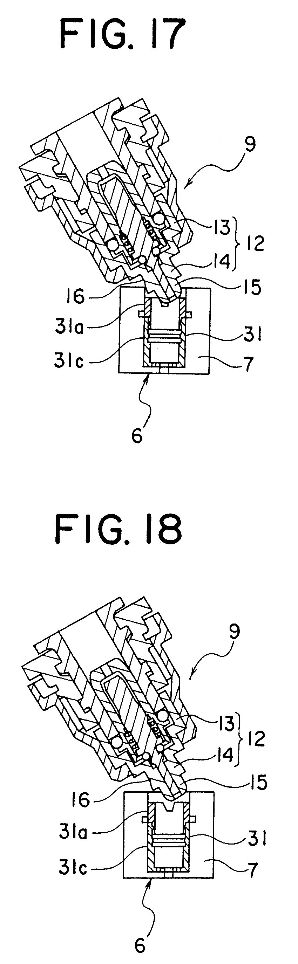

When parts other than the socket body 31 of the socket part 6 do not interfere in detachment of the insertion portion 14, it is needed to consider only the above-described distance (virtual circle with the distance being a radius) from the center to the nearest position on the socket part 6. In practice, as shown in FIG. 15 to FIG. 18, there may be a case that the fuel supply unit 7 or the like of the fuel containing unit 3 in which the socket part 6 is embedded interferes. It is needed that the socket part 6 does not interfere with the spherical portion 15 having a spherical surface which has a radius of curvature with a center at a position of the nozzle part 9 (specifically the insertion portion 14) to contact the fuel supply unit 7 when a bending load is applied to the fuel cartridge 5. To satisfy such a condition, there arises a need to further decrease the radius of curvature of the spherical surface of the spherical portion 15, which makes it difficult to maintain the form of insertion and so on.

In this viewpoint, as shown in FIG. 15 to FIG. 18, the narrow portion 16 provided at the root of the insertion portion 14 of the nozzle part 9 functions effectively. Specifically, as shown FIG. 15 to FIG. 18, the position on the insertion portion 14 to contact the fuel supply unit 7 moves toward the inside of the insertion portion 14 based on the narrowed portion 16, and hence a distance to the spherical surface of the spherical portion 15 with the contact position being the center substantially becomes small. This is equal to a decrease of the radius of curvature of the spherical surface of the spherical portion 15. Therefore, even with the fact that the actual spherical shape of the spherical portion 15 is a shape to be interfered by the socket part 6 when the nozzle part 9 is removed, the interference by the socket part 6 in detachment of the spherical portion 15 can be prevented by decreasing the distance from the contact position to the spherical surface of the spherical portion 15 based on the narrowed portion 16.

As described above, by providing the spherical portion 15 on the tip portion which functions as a substantial insertion portion of the insertion portion 14, and controlling the spherical shape of the spherical portion 15, it becomes possible to easily detach the nozzle part 9 from the socket part 6 when a bending load is applied to the fuel cartridge 5. Further, by providing the narrow portion 16 at the root of the insertion portion 14 of the nozzle part 9, it is possible to substantially decrease the radius of curvature of a spherical surface based on a distance from a center to the spherical portion 15, the center being a position on the insertion portion 14 of the nozzle part 9 to contact the socket part 6 or a part of an apparatus body (the fuel supply unit 7 for example) where the socket part 6 is placed. Therefore, it becomes possible to prevent more effectively the interference by the socket part 6 when the spherical portion 15 is slanted and removed.

However, depending on the shape (insertion length for example) , a way of slanting, and so on of the insertion portion 14 of the nozzle part 9, it is hard to say that there is no possibility of interference of the socket part 6 in removal of the nozzle part 9. In this viewpoint, it is preferable to allow the nozzle part 9 (specifically the insertion portion 14) to deform when a bending load is applied to the fuel cartridge 5. Specifically, the insertion portion 14 of the nozzle head 12 (including the base portion 13 in the case where the base portion 13 is integrally formed with the insertion portion 14) is formed by resin which elastically deforms so as to detach from the socket part 6 when a bending load is applied to the fuel cartridge 5. Thus, by applying a part formed of soft resin which easily deforms to the nozzle head 12, breakage of the nozzle part 9 can be suppressed.

The deformation of the nozzle head 12 is not limited to elastic deformation, and a part thereof may be allowed to deform plastically. Further, detachment of the nozzle part 9 fromthe socket part 6 may be facilitated by allowing a portion of the socket part 6 to deform elastically or plastically. By allowing a portion of the nozzle part 9 or the socket part 6 to deform with respect to a bending load to the fuel cartridge 5, the nozzle part 9 can be allowed to detach from the socket part 6 without breakage when the bending load is applied to the fuel cartridge 5 coupled to the fuel cell body 4. Accordingly, it becomes possible to suppress occurrence of a problem (such as leakage of liquid) due to breakage of the nozzle part 9 of the fuel cartridge 5 in particular.

For realizing elastic deformation or plastic deformation of the nozzle part 9 and the socket part 6, it is preferable that resin having elasticity modulus for bending of 1800 MPa or lower based on JIS K7171 is applied to the materials thereof. Such resin can be applied to a part of the nozzle part 9 and/or the socket part 6. Using resin having elasticity modulus for bending of 1800 MPa or lower, elastic deformation and plastic deformation of the nozzle part 9 can be realized more reliably. In other words, when a bending load is applied to the fuel cartridge 5 coupled to the fuel cell body 4, it is possible to allow detachment from the socket part 6 with better repeatability without breaking the nozzle part 9 and the valve mechanism therein.

Examples of resin that satisfy the above-described conditions include low-density polyethylene (LDPE), high-density polyethylene (HDPE), linear low-density polyethylene (LLDPE), crosslinked high-density polyethylene (XLPE), high molecular weight polyethylene (HMWPE), ultra high molecular weight polyethylene (UHMWPE), polypropylene (PP), propylene copolymer (PPCO), and the like. Further, since the constituting material of the nozzle part 9 contacts methanol fuel or the like, it is preferable to have methanol resistance.

Regarding the methanol resistance of resin as a constituting material of the nozzle part 9 (specifically the nozzle head 12), it is preferable to satisfy mass change ratio of 0.3% or lower, length change ratio of 0.5% or lower, thickness change ratio of 0.5% or lower in an immersion test in pure methanol in accordance with JIS K7114 "Methods of testing plastics for resistance to chemicals." When values of the respective change ratios are larger than the above values, it is possible that dissolution of or a stress cracking in the nozzle part 9 occurs when methanol fuel or the like is accommodated in the fuel cartridge 5 and subjected to practical use. Therefore, practical durability and/or reliability of the fuel cartridge 5 decrease.

The mass change ratio, the length change ratio and the thickness change ratio of resin by an immersion test in pure methanol are measured as follows. First, as a test piece, a plate of 30 mm $\times$ 30 mm $\times$ thickness 2 mm is prepared. The mass (M1), the length (L1), and the thickness (T1) of this test piece are measured. Next, the test piece is immersed completely in a test solution (pure methanol having concentration of 99.8%) at $23 \pm 2°C$, and is left at rest for seven days with the temperature being maintained. Thereafter, the test piece is taken out of the test solution and washed by water, moisture adhering to the surface of the test piece is removed, and thereafter the mass (M2), length (L2), and thickness (T2) after the test are measured. The lengths (L1, L2) are each taken from an average value of lengths of the test piece in longitudinal and lateral directions. The thicknesses (T1, T2) are each taken from an average value of thicknesses measured at five positions which are a center portion and corners (5 mm inside from an edge) of the test piece.

From the mass (M1), length (L1), thickness (T1) of the test piece before the test, and the mass (M2) length (L2), thickness (T2) after the test, the mass change ratio M, the length change ratio L and the thickness change ratio T are calculated based on the following equation (1), equation (2), and equation (3), respectively.

$$M = \{(M2 - M1)/M1\} \times 100 \ (\%) \ ... \ (1)$$

$$L = \{(L2 - L1)/L1\} \times 100 \ (\%) \ ... \ (2)$$

$$T = \{(T2 - T1)/T1\} \times 100 \ (\%) \ ... \ (3)$$

Table 1 shows elasticity modulus for bending and methanol resistance (mass change ratio, length change ratio and thickness change ratio by an immersion test in pure methanol) of low-density polyethylene (LDPE), high-density polyethylene (HDPE), linear low-density polyethylene (LLDPE), high molecular weight polyethylene (HMWPE), ultra high molecular weight polyethylene (UHMWPE), polypropylene (PP).
[Table 1]

|  | Elasticity Modulus (MPa) | Methanol Resistance | | |
| --- | --- | --- | --- | --- |
|  |  | Mass Change Ratio (%) | Average Length Change Ratio (%) | Average Thickness Change Ratio (%) |
| LDPE | 220 | 0.04 | 0.17 | 0.10 |
| HDPE | 1000 | 0.03 | 0.09 | 0.02 |
| LLDPE | 440 | 0.04 | 0.10 | 0.04 |
| HMWPE | 1590 | 0.18 | 0.38 | 0.12 |
| UHMWPE | 790 | 0.04 | 0.01 | 0.03 |
| PP | 1450 | 0.14 | 0.38 | 0.01 |

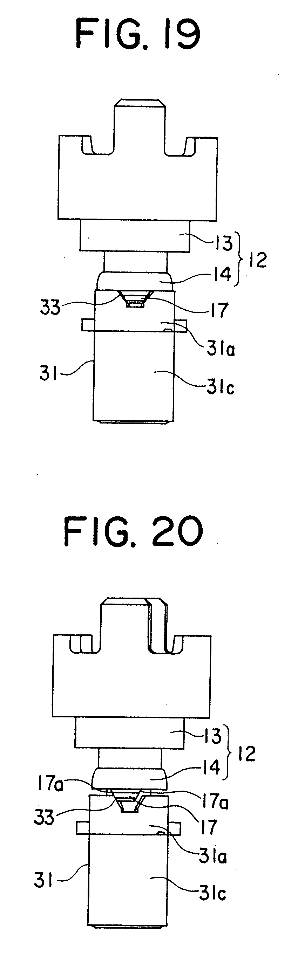

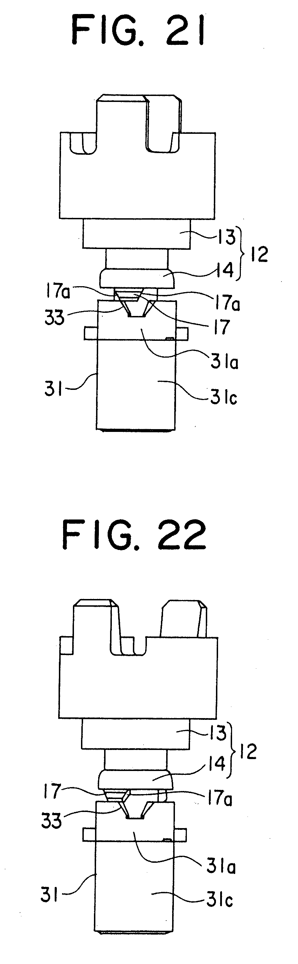

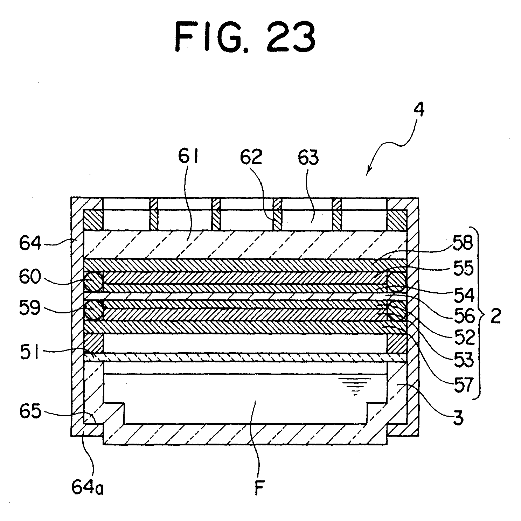

Components other than the nozzle head 12 of the nozzle part 9 and components of the socket part 6 can be formed of the above-described super engineering plastics (PEEK, PPS, LCP, or the like), or general-purpose engineering plastics (PET, PBT, POM, or the like). As long as strength, coupling strength, or the like as a coupler can be maintained, soft resin can be applied to parts other than the nozzle head 12.
In the case that an excessive rotational force is applied to the fuel cartridge 5, the coupling state is released based on the cam portions 17 and the cam follower portions 33 as described above. Specifically, as shown in FIG. 19 to FIG. 22, the cam surfaces 17a of the cam portions 17 and the cam follower portions (cam follower trenches) 33 rotate while being in contact, and thus the force in a direction of the center axis acts to separate the nozzle part 9 and the socket part 6, thereby releasing the coupling state thereof.
Next, the structure of the fuel cell body 4 can be explained. The fuel cell body 4 is not particularly limited, and for example a DMFC of passive type or active type can be applied, to which a satellite type fuel cartridge 5 is coupled as necessary. Here, an embodiment applying a DMFC of internal vaporization type to the fuel cell body 4 is explained with reference to FIG. 23. The DMFC 4 of internal vaporization type (passive type) shown in FIG. 23 has, in addition to the fuel cell unit 2 constituting an electromotive unit and the fuel containing unit 3, a vapor/liquid separating film 51 interposed therebetween.
The fuel cell unit 2 has a membrane electrode assembly (MEA) constituted of an anode (fuel anode) having an anode catalyst layer 52 and an anode gas diffusion layer 53, a cathode (oxidant electrode/air electrode) having a cathode catalyst layer 54 and a cathode gas diffusion layer 55, and a proton (hydrogen ion)-conductive electrolyte film 56 sandwiched by the anode catalyst layer 52 and the cathode catalyst layer 54. Examples of catalysts contained in the anode catalyst layer 52 and cathode catalyst layer 54 include single elements of the platinum group such as Pt, Ru, Rh, Ir, Os, Pd, and so on, alloys including elements of the platinum group, and the like.
For the anode catalyst layer 52, it is preferable to use Pt-Ru, Pt-Mo or the like having strong resistance against methanol and carbon monoxide. For the cathode catalyst layer 54, it is preferable to use Pt, Pt-Ni, or the like. A supported catalyst using a conductive support such as carbon material or a non-supported catalyst may be used. Examples of a proton conductive material constituting the electrolyte film 56 include fluorine resin such as perfluoro sulfonic acid polymer having the sulfonic acid group (Nafion (name of product made by Dupont), Flemion (name of product made by Asahi Glass Co., Ltd), or the like), hydrocarbon resin having sulfonic acid group, inorganic substances such as tungstic acid and phosphotungstic acid, and the like.
The anode gas diffusion layer 53 layered on the anode catalyst layer 52 serves a role to supply fuel to the anode catalyst layer 52 evenly, and simultaneously combines a role of current collector for the anode catalyst layer 52. On the other hand, the cathode gas diffusion layer 55 layered on the cathode catalyst layer 54 serves a role to supply oxidant to the cathode catalyst layer 54 evenly, and simultaneously combines a role of current collector for the cathode catalyst layer 54. An anode conductive layer 57 is layered on the anode gas diffusion layer 53, and a cathode conductive layer 58 is layered on the cathode gas diffusion layer 55.

The anode conductive layer 57 and the cathode conductive layer 58 are each constituted of, for example, a mesh formed of conductive metal material such as Au, a porous film, a thin film, or the like. Note that rubber O-rings 59, 60 are interposed respectively between the electrolyte film 56 and the anode conductive layer 57 and between the electrolyte film 56 and the cathode conductive layer 58, and they prevent leakage of fuel or oxidant from the fuel cell unit (membrane electrode assembly) 2.

In the fuel containing unit 3, methanol fuel is filled as liquid fuel F. Further, the fuel containing unit 3 has an opening on a fuel cell unit 2 side, and the vapor/liquid separating film 51 is arranged between this opening portion of the fuel containing unit 3 and the fuel cell unit 2. The vapor/liquid separating film 51 is a vapor selecting and passing film that passes only vaporized components of the liquid fuel F, and does not pass liquid components. An example of a constituting material of the vapor/liquid separating film 51 is fluorine resin such as polytetrafluoroethylene. The vaporized components of the liquid fuel F mean an air-fuel mixture constituted of vaporized components of methanol and vaporized components of water when a methanol solution is used as the liquid fuel F, and mean vaporized components of methanol when pure methanol is used.

A moisture retention layer 61 is layered on the cathode conductive layer 58, and a surface layer 62 is layered further thereon. The surface layer 62 has a function to adjust an amount of air taken in as oxidant, and adjustment thereof can be performed by changing the number, size or the like of air introducing holes 63 formed in the surface layer 62. The moisture retention layer 61 serves a role of suppressing evaporation of water by being impregnated with part of water generated by the cathode catalyst layer 54, and also has a function to facilitate even diffusion of oxidant to the cathode catalyst layer 54 by introducing oxidant evenly to the cathode gas diffusion layer 55. The moisture retention layer 61 is constituted of a member having a porous structure for example, and an example of a specific constituting material thereof is a porous body of polyethylene, polypropylene, or the like.

Then, the vapor/liquid separating film 51, the fuel cell unit 2, the moisture retention layer 61, and the surface layer 62 are layered sequentially on the fuel containing unit 3, and further a stainless cover 64 for example is placed thereon to retain the entire body, thereby constituting the passive type DMFC (fuel cell body) 4 of this embodiment. The cover 64 has openings provided at positions corresponding to the air introducing holes 63 formed in the surface layer 62. A terrace 65 receiving claws 64a of the cover 64 is provided on the fuel containing unit 3, where the claws 64a are crimped onto this terrace 65 to thereby retain the entire fuel cell body 4 integrally by the cover 64. Although omitted in FIG. 23, the fuel supply unit 7 having the socket part 6 is provided on a lower surface side of the fuel containing unit 3 as shown in FIG. 1.

In the passive type DMFC (fuel cell body) 4 having the above-described structure, the liquid fuel F (methanol solution for example) in the fuel containing unit 3 vaporizes, and vaporized components thereof pass through the vapor/ liquid separating film 51 and are supplied to the fuel cell unit 2. In the fuel cell unit 2, the vaporized components of the liquid fuel F are diffused in the anode gas diffusion layer 53 and supplied to the anode catalyst layer 52. The vaporized components supplied to the anode catalyst layer 52 cause internal reforming reaction of methanol as shown by the following equation (4).

$$CH_3OH + H_2O \rightarrow CO_2 + 6H^+ + 6e^- \qquad (4)$$

On the other hand, when pure methanol is used as the liquid fuel F, moisture vapor is not supplied from the fuel containing unit 3. Accordingly, water generated in the cathode catalyst layer 54 or water in the electrolyte film 56 is brought to react with methanol to cause the internal reforming reaction of the equation (4), or internal reforming reaction is caused by another reaction mechanism that does not require water, not by the internal reforming reaction of the equation (4).

Proton ($H^+$) generated by the internal reforming reaction conducts through the electrolyte film 56 and reaches the cathode catalyst layer 54. Air (oxidant) taken in through the air introducing holes 63 in the surface layer 62 diffuses through the moisture retention layer 61, the cathode conductive layer 58, the cathode gas diffusion layer 55, and is supplied to the cathode catalyst layer 54. The air supplied to the cathode catalyst layer 54 causes reaction shown by the following equation (5). This reaction causes power generation reaction which accompanies generation of water.

$$(3/2)O_2 + 6H^+ + 6e^- \rightarrow 3H_2O \qquad (5)$$

As the power generation reaction based on the above-described reaction proceeds, the liquid fuel F (methanol solution or pure methanol for example) in the fuel containing unit 3 is consumed. Since the power generation reaction stops as soon as the liquid fuel F in the fuel containing unit 3 runs out, liquid fuel is supplied to the fuel containing unit 3 from the fuel cartridge 5 at the moment of run out or a moment before that. Supply of liquid fuel from the fuel cartridge 5 is implemented by inserting the nozzle part 9 of the fuel cartridge 5 side in the socket part 6 of the fuel cell body 4 side to thereby couple them.

Note that the present invention is not limited to any type, mechanism, or the like of a fuel cell as long as it is a fuel cell supplying liquid fuel by a fuel cartridge, but is particularly preferable for passive type DMFCs which are currently miniaturized. The specific structure of the fuel cell is not particularly limited as well, where components can be modified and embodied in the range not departing from the technical scope of the present invention at the stage of implementation. Moreover, various modifications are possible by appropriately combining a plurality of components among the components shown in the above embodiment, deleting some of the components shown in the embodiment, and the like. The embodiment of the present invention can be extended or changed within the range of the technical scope of the present invention, and such extended and modified embodiments are included in the technical scope of the present invention.

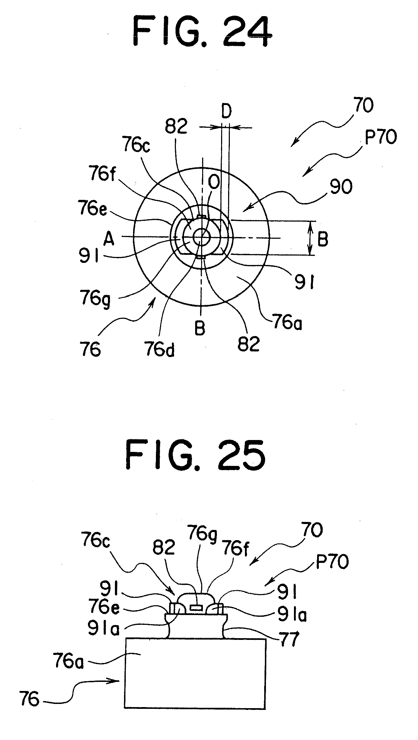

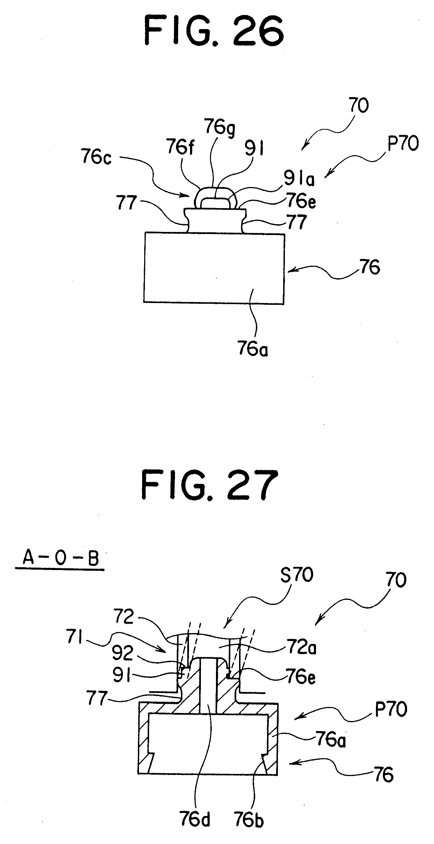

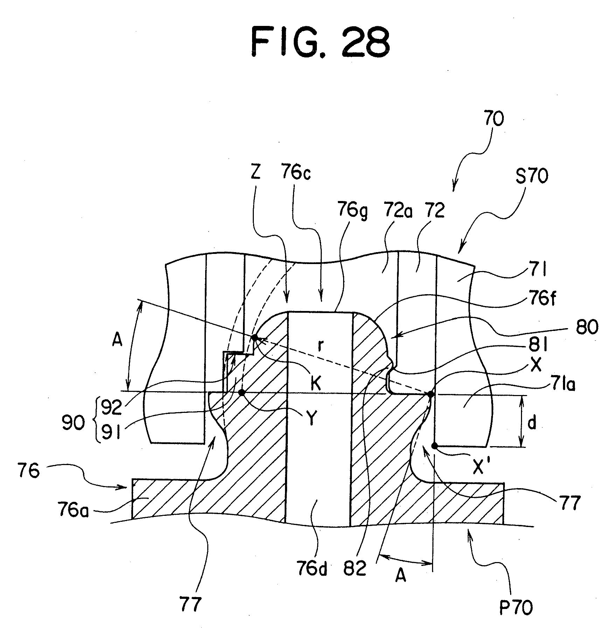

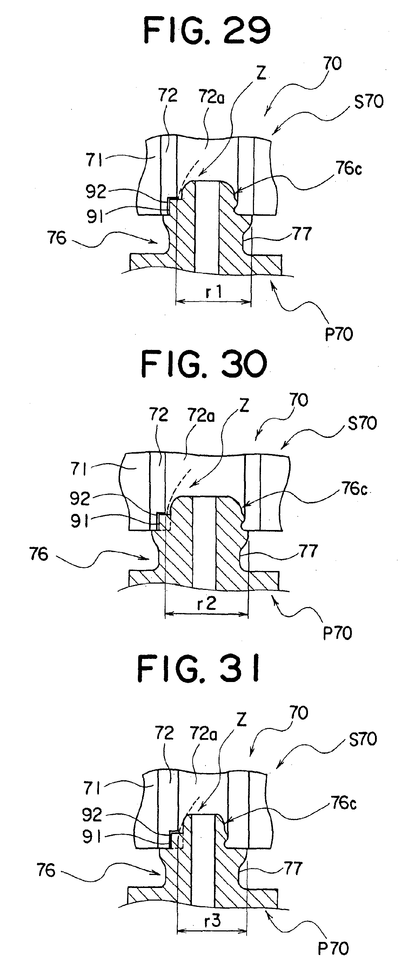

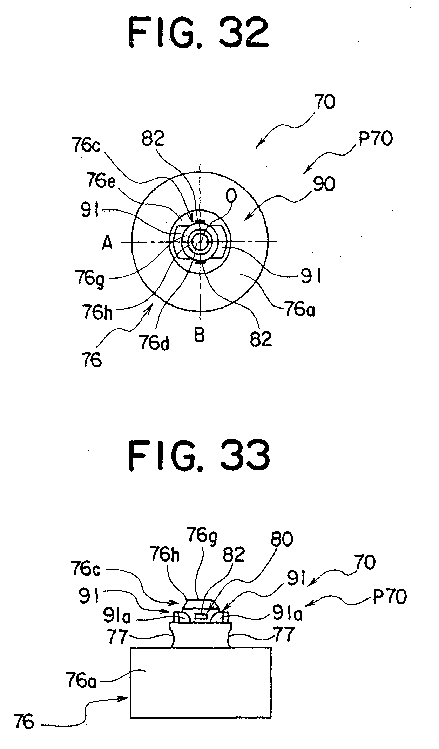

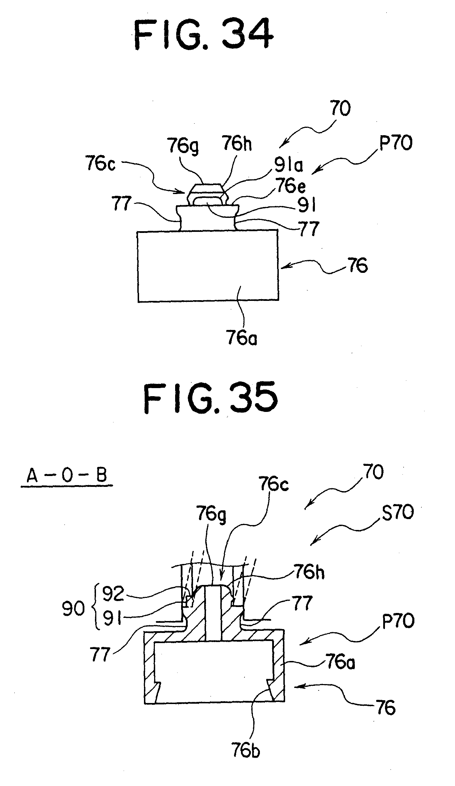

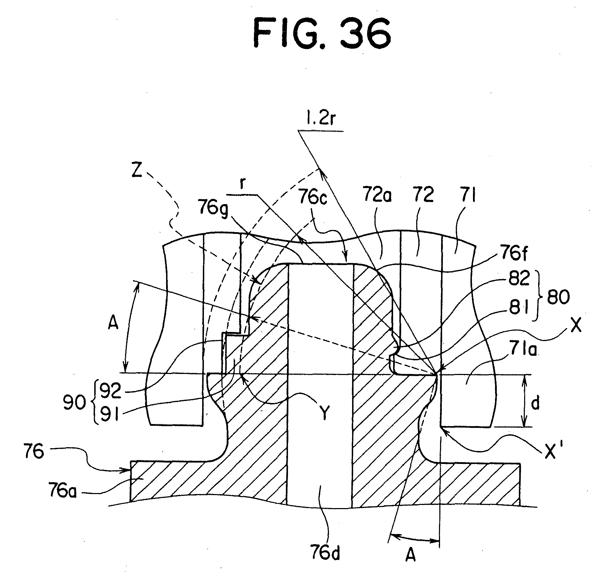

Next, the coupler constituted of the nozzle part (plug) and the socket part (socket) of the above-described embodiment will be described in detail. FIG. 24 to FIG. 28 show the structure of the coupler according to the embodiment of the present invention. FIG. 24 is a plan view of the plug, FIG. 25 is a front view of the plug, FIG. 26 is a side view of the plug, and FIG. 27 is an A-O-B cross-sectional view of the plug. FIG. 28 is an enlarged cross-sectional view corresponding to FIG. 27. FIG. 29 to FIG. 31 are cross-sectional views showing modification examples of the plug shown in FIG. 28. FIG. 32 to FIG. 35 show a plug of a coupler according to another embodiment of the present invention. FIG. 36 shows the structure of a coupler according to still another embodiment of the present invention. In these views, a valve element and a biasing member thereof are omitted.

A coupler 70 of this embodiment is constituted of a socket S70 and a plug P70 engaged with and coupled to this socket S70. The socket S70 is provided on a body side of a fuel cell for example. The plug P70 is provided on a cartridge side as a fuel container. The coupler 70 makes the fuel cell body and the cartridge communicable with each other, and is used when refilling fuel to the body side or replace the cartridge itself.

For a main part of the socket S70, a nonmetallic material, such as polypropylene (PP), high-density polyethylene (HDPE), polystyrene (PS), or the like is used for example. Further, super engineering plastic having methanol resistance such as polyphenylene sulfide (PPS), polyetheretherketone (PEEK), liquid crystal polymer (LCP), or the like, or general-purpose engineering plastic such as polyethylene terephthalate (PET), polybutylene terephthalate (PBT), polyacetal (POM), or the like is used preferably.

The following explanation will be given on the basis of a longitudinal direction on the drawings, but there is no intention to limit the direction of attaching in an actual container body. It may be implemented in any direction. As a schematic structure shown in FIG. 27 to FIG. 31, the socket S70 of the coupler 70 is constituted by attaching a socket body 72 having a substantially cylindrical shape to a center portion of a socket member 71 having a substantially cylindrical shape to be attached to an attachment hole having a recessed shape formed in the body of a fuel cell.

A channel is formed in a center portion in a cylinder of the socket body 72. A tip end portion of this channel is a plug coupling hole 72a for coupling to the plug P70, and in this channel a valve element, an elastic member biasing the valve element in a closing direction, and so forth, which are not-shown, are provided. They constitute a construction capable of coupling in a sealed state. Although omitted in the drawings, the plug coupling hole 72a is formed in a shape corresponding to the shape of a coupling portion of the plug P70. The socket S70 is constructed such that an operating part integrated with the not-shown valve element is operated along with coupling to the plug P70 to thereby make the sealed state automatically, and thereafter the valve element is opened/closed.

For a main part of the plug P70 engaged with and coupled to the socket S70, similarly to the socket S70 for example, a nonmetallic material, such as polypropylene (PP), high-density polyethylene (HDPE), polystyrene (PS), or the like is used for example. Further, super engineering plastic having methanol resistance such as polyphenylene sulfide (PPS), polyetheretherketone (PEEK), liquid crystal polymer (LCP), or the like, or general-purpose engineering plastic such as polyethylene terephthalate (PET), polybutylene terephthalate (PBT), polyacetal (POM), or the like is used preferably.

As shown in FIG. 24 to FIG. 31, the plug P70 has a plug body 76 in a substantially cylindrical shape attached to a tip portion outer periphery of a nozzle of a container in which liquid fuel for a not-shown fuel cell is accommodated. A not-shown container tip is attached to a large-diameter cylindrical portion 76a in a cylindrical shape of a base end portion (lower end portion in the drawings) of the plug body 76, and the nozzle of the container is locked by a locking ring portion 76b in a lower end inner periphery, thereby attaching the plug P70 to the container. A projecting coupling portion 76c is formed on the plug body 76, which projects on a tip part and is attached to the plug coupling hole 72a of the socket S70. A channel 76d is formed by penetration in a center portion of the plug body 76 including the projecting coupling portion 76c.

In the plug body 76, similarly to the socket S70, a valve element, an elastic member biasing the valve element in a closing direction, and so forth, which are not shown, are provided. A not-shown O-ring is attached to the projecting coupling portion 76c. In the plug P70, when the projecting coupling portion 76c of the plug P70 is inserted in the plug coupling hole 72a of the socket S70, a seal by the outer peripheral surface of the O-ring is started. Further, by the O-ring contacting a tip portion and so forth of the plug coupling hole 72a, a seal by a tip surface thereof can be made as well. In such a sealed state, an operating part integrated with the valve element is operated along with coupling to the socket S70 to thereby open the valve element automatically, and in the coupling state, the channel 76d of the plug P70 and the channel of the socket S70 are made communicable.

The coupler 70 is provided with a coupling retention member 80 for retaining the coupling state of the socket S70 and the plug P70. For example, the coupling retention member 80 is constructed to have one side being an engaging recess portion 81, and an opponent side being an engaging projection portion 82. These are inserted to/detached from each other by going over each other in a straight direction. One operation of pushing in can cause engagement to couple and retain them, and one operation of pulling out can cause release. In the socket S70 of the coupler 70, on an inner peripheral lower end portion of the plug coupling hole 72a of the socket body 72 attached to the fitting hole of the body of the fuel cell, the engaging recess portion 81 as one side of the coupling retention member 80 is formed with a portion slightly projecting from the lower end and a recess at an upper side thereof, and formed at each of two diagonal positions sandwiching a center axis of the socket S70 longitudinally on a circumference thereof.

On the plug P70 of the coupler 70, as shown in FIG. 28 to FIG. 31, the engaging projection portion 72 is formed projecting outward on a base end outer periphery of the projecting coupling portion 76c of the plug body 76. As shown in FIG. 24, the engaging projection portion 82 is formed at each of two diagonal positions sandwiching a center axis of the plug P70 longitudinally on a circumference thereof. Accordingly, when the plug P70 having the engaging projection portions 82 is inserted in the engaging recess portion 81 on the socket S70 side as the opponent side, it is pushed in so as to go over each other. After the insertion is completed, lower end surfaces of the engaging projection portions 82 and upper end surfaces of the engaging recess portions 81 are engaged, and thereby the coupling state is maintained. When releasing the coupling, the plug P70 having the engaging projection portions 82 is removed from the engaging recess portion 81 on the socket S70 side as the opponent side, and then they are detached going over each other, thereby turning to a separated state in which the coupling state is released.

In the coupler 70 as such, when a force is applied to bend one of the socket S70 and the plug P70 in a coupling state, it is possible that the projecting coupling portion 76c of the plug P70 interferes with the plug coupling hole 72a of the socket S70, to thereby cause damage. Accordingly, considering a behavior of the coupler 70 in a coupling state in a case that a bending force is applied thereto, the plug P70 and the socket S70 bend relatively with a fulcrum that is an outermost peripheral point X on a coupling surface 76e of the base end portion of the projecting coupling portion 76c of the plug body 76 of the plug P70.

When the plug P70 turns relatively with the outermost peripheral point X on the coupling surface 76e being a fulcrum, if occurrence of interference is prevented between the projecting coupling portion 76c and the plug coupling hole 72a of the socket S70, the coupler 70 can be separated while preventing damage or breakage. For preventing this interference, there is assumed a virtual circle with a radius "r" as a distance from the outermost peripheral point X on the coupling surface 76e to an intersection point Y of a lower end circumference of the plug coupling hole 72a and a diagonal position of the point X, and a virtual space formed by rotating this virtual circle on the center axis of the plug P70 is set as an interference prevention space Z, where the projecting coupling portion 76c of the plug P70 may be constructed to be located within the space.

As the shape of the projecting coupling portion 76c of the plug P70 located within such a virtual interference prevention space Z, as shown in FIG. 24 to FIG. 31 for example, a tip portion side surface is formed by a portion 76f of a spherical surface, and a tip surface is formed by a flat surface 76g as a seal portion. Such a virtual interference prevention space Z formed by rotating the virtual circle with the radius "r" being the distance from the point X to the point Y becomes different in shape when the radius "r" is changed as r1, r2, r3 as shown in FIG. 29 to FIG. 31, but in any case, the projecting coupling portion 76c may be constructed to be located within the space.

According to the coupler 70 described above, when a bending force is applied to the coupler 70 in the coupling state, the plug P70 and the socket S70 bend relatively with a fulcrum that is the outermost peripheral point X on the coupling surface 76e of the base end portion of the projecting coupling portion 76c of the plug body 76 of the plug P70. Since the projecting coupling portion 76c is constructed to be located within the interference prevention space Z where interference does not occur between the projecting coupling portion 76c of the plug P70 and the plug coupling hole 72a of the socket S70, the coupler 70 can be separated without interference, and thereby damage or breakage can be prevented.

Since the tip portion side surface of the projecting coupling portion 76c is a portion of the spherical surface, a smooth separation can be made in case that interference with the plug coupling hole 72a occurs. Further, with the tip portion side surface of the projecting coupling portion 76c being a portion of the spherical surface, when a seal material is provided between this portion of the spherical surface and the plug coupling hole 72a to seal them, a sealed state thereof can be maintained even when the plug P70 and the socket S70 bend relatively. As the shape of the projecting coupling portion 76c of the plug P70 located within the virtual interference prevention space Z, the tip portion side surface may be formed of a sloping surface 76h as shown in FIG. 32 to FIG. 35 for example.

Further, when the shape of the projecting coupling portion 76c of the plug P70 is made as a shape located within the virtual interference prevention space Z which is already explained, it can be separated without causing interference with the socket S70. Typically, the plug P70 and the socket S70 constituting the coupler 70 is made of synthetic resin or the like, and hence they can be separated without causing damage or breakage while being in contact as long as it is within the range of elastic deformation thereof. Therefore, the shape of the projecting coupling portion 76c of the plug P70 may be a shape located within a second virtual interference prevention space having a radius 1.2r that is 1.2 times the radius "r" of the virtual circle, as shown in FIG. 36.

By the shape of the projecting coupling portion 76c of the plug P70 located within the second interference prevention space, there are also added elastic deformation of the plug P70 or the socket S70 itself and effects regarding shapes of a hollow portion by the channel 76d formed in the center portion of the plug. Thus, when a bending force is applied to the coupler 70 in the coupling state, the outermost peripheral point X on the coupling surface 76e of the base end portion of the projecting coupling portion 76c of the plug body 76 of the plug P70 becomes a fulcrum for the plug P70 and the socket S70 to bend relatively. The coupler 70 can be separated while there is interference between the projecting coupling portion 76c of the plug P70 with the plug coupling hole 72a of the socket S70, and thereby damage or breakage can be prevented.

In this coupler 70, as shown in FIG. 29 to FIG. 31, when the socket body 72 of the socket S70 ends at the coupling surface 76e of the plug P70 and there is no portion projecting further downward, the plug P70 turns about the fulcrum X when a bending force is applied to the coupler 70. As shown in FIG. 28, a projecting portion 71a is provided on the socket body 72 to project downward by "d", and a recess portion formed by this projecting portion 71a is used for attaching a lid or cover for when the coupler 70 is not in use without allowing it to project.

In the case where the socket body 72 has the downward projecting portion 71a and the base end portion of the plug P70 has a cylindrical shape with the same radius as the coupling surface, when a bending force is applied to the coupler 70, the plug P70 is made to turn with a point X' on a lower end circumference of the projecting portion 71a being a fulcrum after it starts to turn about the fulcrum X. In this case, interference with the socket S70 occurs, and a smooth separation is not possible. Accordingly, a narrow portion 77 which prevents interference with the point X' on the lower end circumference of the projecting portion 71a of the socket body 72 is formed on a base end portion of the coupling surface 76e of the plug P70.

As shown in FIG. 28, the narrow portion 77 may have a shape such that a point K on the plug P70 that is closest to the virtual interference prevention space Z (radius "r" of the virtual circle), namely a point having a highest possibility of interference with the socket S70, does not interfere with the point X' while the plug P70 turns about the fulcrum X by a bending force and until it detaches from the socket S70. Assuming that the angle until detachment is made is A, the narrow portion 77 is constructed such that the point X' does not interfere when it turns about the fulcrum X by the same angle A.

By forming the narrow portion 77 on the base end portion of the plug P70, the plug P70 does not turn about the point X' on the lower end circumference of the projecting portion 71a being a fulcrum after the plug P70 starts turning about the fulcrum X when a bending force is applied to the coupler 70. While the fulcrum of turning is maintained at X, interference with the socket S70 is prevented so as to allow the coupler 70 to separate smoothly. Here, the explanation is given about the case of providing, in a combined manner, the construction of forming the coupler 70 with the narrow portion 77 and the construction of positioning the projecting coupling portion 76c of the plug P70 within the virtual interference prevention space Z. The respective constructions may be provided independently, and also when only the narrow portion is provided, separation of the coupler can be done smoothly.

Next, a release member 90 will be explained, which is for preventing damage to the coupler 70 or to an apparatus on a body side in a case that an excessive force (force to rotate beyond limit) surpassing a normal use range is applied in a rotational direction about a center axis of the socket S70 and/or the plug P70 in the coupler 70. Both of the construction of positioning the projecting coupling portion 76c of the plug P70 within the virtual interference prevention space Z of the coupler 70 and the construction of providing the narrow portion 77 at the lower end portion of the coupling surface 76e, which are already described, are constructions for preventing damage or breakage when a bending force is applied to the coupler 70. In addition thereto, the release member 90 intends to protect from a force to rotate beyond limit.

The release member 90 is constructed by providing one of the socket S70 and the plug P70 with cam portions 91 and providing the other one thereof with cam follower portions 92. An excessive rotational force is converted into a separating force in an insertion/detachment direction, to thereby enable automatic release of coupling. As shown in FIG. 24 and FIG. 25, the cam portions 91 as one side of the release member 90 are constructed as cam surfaces 91a respectively at diagonal positions on a circumference concentric with the projecting coupling portion 76c of the plug P70, each cam surface 91a having sloping surfaces projecting upward in a string direction thereof, which is a direction along a substantial circumference, on both sides respectively in the circumference direction. Corresponding to these cam portions 91 each constituted of the cam surfaces 91a projecting upward, the cam follower portions (cam follower trenches) 92 are formed as trenches corresponding to cam shapes respectively at diagonal positions on the socket body 72 of the socket S70. The cam follower trenches 92 are formed respectively on both sides of the plug coupling hole 72a.

The cam surfaces 91a and the cam follower trenches 92a are constructed at least so as not to contact each other until the plug P70 and the socket S70 are in an engaging and coupling state. Then, these cam surfaces 91a and the cam follower trenches 92a are each formed with a longitudinal width that is substantially equal to the diameter of the plug P70, and thus they can be arranged in the same arrangement space as the coupler 70. Therefore, between the plug P70 and the socket S70, when a force in a rotational direction about the center axis thereof is applied relatively, the cam surfaces 91a of the cam portions 91 and the cam follower trenches 92 along the substantial circumference direction rotate while being in contact with each other, and thereby a force in a direction of the center axis operates between the plug P70 and the socket S70 to separate them from each other, resulting in automatic release of the coupling state.

As described above, the release member 90 enables automatic release of the coupling state when an excessive force in a rotational direction surpassing a normal use range is applied. Accordingly, the plugP70 can be removed fromthe socket S70 safely and automatically when an excessive rotational force surpassing a normal use range is applied without damaging the coupler 70 or breaking the body of an apparatus and so forth. Using the release member 90, when the plug P70 is removed from the socket S70, the separating force can be easily generated to remove the plug P70 by applying a rotational force.

To allow separation of the coupler 70 when a bending force is applied in the case where the cam portions 91 and the cam follower portions 92 as such a release mechanism 90 are provided, they are constructed so that, as shown in FIG. 28, the plug P70 can be removed without allowing a furthermost interference point on one of the cam portions 91 from the fulcrum X to interfere with the corresponding cam follower portion 92 when the plug P70 turns about the fulcrum X.

Moreover, this coupler 70 is provided with an identification member for inhibiting coupling of the plug P70 of a container having a different concentration (concentration of methanol for example) of fuel used in the fuel cell for example. On an orthogonal flat surface (coupling surface 76e) which crosses an engaging and coupling direction of the two cam portions 91 on diagonal positions of the release member 90 and the two cam follower portions 92 as trenches with which the two cam portions engage, an identification function is added by changing dimensions in longitudinal and lateral directions thereof, namely sizes in a substantially circumference direction (widths) and sizes in a substantially radial direction (thicknesses) of the cam portions 91 and the cam follower portions 92.

This identification member enables identification of others by changing widths B and thicknesses D of the two cam surfaces 91a at diagonal positions and the cam follower trenches 92a with which the two cam surfaces 91a engage, and by combining enlargement of the widths B and reduction of the thicknesses D. Specifically, when it is tried to couple ones each having a large width B and a large thickness D to each other, the cam surfaces 91a of a combination of small ones with each other cannot be identified to the large cam follower trenches 92a, thereby preventing engagement and coupling. For example, in a case of identifying four pairs of plugs P70 and sockets S70, combinations may be set as: (1) width B1 and thickness D1, (2) width B2 and thickness D2, (3) width B3 and thickness D3, (4) width B4 and thickness D4, where $B1 > B2 > B3 > B4$, $D1 < D2 < D3 < D4$.

In this manner, the release mechanism 90 is used for identification, but in a case that an excessive force (force to rotate beyond limit) surpassing a normal use range is applied, a clearance is needed in a rotational direction between the cam portions 91 and the cam follower portions 92. The identification is realized by giving a dimensional difference in width B and thickness D larger than this clearance, where the clearance is approximately 0.1 mm for example, and the dimensional difference is approximately 0.3 mm to 0.5 mm for example. Further, in this coupler 70, to prevent damage or the like due to a bending force, dimensions are set so that interference does not occur between the cam portions 91 and the cam follower portions 92 also for the case that the plug P70 turns about the fulcrum X.

Here, the cam portions 91 of the coupler 70 of the above-described embodiment are provided integrally with the projecting coupling portion of the plug P70, and the cam follower portions 92 are provided integrally with the plug coupling hole of the socket S70. The cam portions and the cam follower portions may be provided by replacing them. Further, in the above-described respective embodiments, the identification characteristic is given by changing dimensions in longitudinal and lateral directions of the cam portions and the cam follower portions as the identification member. As shown in FIG. 29 to FIG. 31, the identification characteristic may be added by combining changes of a diameter of the tip of the projecting coupling portion of the plug and an opening diameter of the plug coupling hole with which the plug is engaged. In this case, for example, setting can be made such that a plug having a large tip diameter and cam portions each having a small width or thickness are combined in a crossed manner, so that it is not possible to engage small one and large one with each other.

Further, the number of cam portions and the number of cam follower portions are not limited to two at diagonal positions, where changes of the number can be combined to increase identification patterns. While the case of coupling the fuel container of the fuel cell and the body thereof is explained as an application of these couplers, it is not limited to this application but may be other applications, and the present invention is particularly preferable for a case where identification of various types is necessary. Further, in the above embodiments, explanations about the valve elements provided in the socket and the plug and the elastic members biasing them in a closing direction are omitted, but by positioning the valve elements provided in the plug more inside than the tip surface of the projecting coupling portion, it is possible to prevent that the valve sheets are directly operated to open when a finger or the like comes in contact accidentally.

Industrial Applicability

The fuel cartridge for the fuel cell according to an aspect of the present invention is capable of allowing easy detachment of the nozzle part from the socket part when a bending load is applied to the fuel cartridge coupled to the fuel cell body. Therefore, it becomes possible to suppress occurrence of a problemdue to damaging of the nozzle part of the fuel cartridge. A fuel cell using such a fuel cartridge is excellent in safety and reliability, and hence can be effectively used as power supply for various devices and apparatuses.

**Claims**

1.  A fuel cartridge for a fuel cell, comprising:

    a cartridge body containing liquid fuel for the fuel cell; and
    a nozzle part having a nozzle head provided on said cartridge body and a valve mechanism arranged in the nozzle head, said nozzle part supplying the liquid fuel to a fuel cell body,

    wherein the nozzle head has a spherical portion provided in a tip of an insertion portion which is inserted in a socket part of the fuel cell body.

2.  The fuel cartridge for the fuel cell according to claim 1,
    wherein the spherical portion has a spherical surface with a curvature equal to or smaller than a virtual circle, which has a center at a position on said nozzle part to contact the socket part when a bending load is applied to the fuel cartridge coupled to the fuel cell body, and a radius from the center to a nearest position on the socket part to interfere in detachment of said nozzle part.

3.  The fuel cartridge for the fuel cell according to claim 1,
    wherein the nozzle head has a narrow portion provided at a root of the insertion portion.

4.  The fuel cartridge for the fuel cell according to claim 1,
    wherein said nozzle part has a resin part which deforms so as to detach from the socket part when a bending load is applied to the fuel cartridge coupled to the fuel cell body.

5.  The fuel cartridge for the fuel cell according to claim 4,
    wherein said nozzle part detaches from the socket part by elastic or plastic deformation of the resin part with respect to the bending load.

6.  The fuel cartridge for the fuel cell according to claim 1,
    wherein the valve mechanism comprises a valve having a valve head and a valve stem, and an elastic member pressing the valve head to a valve sheet provided in the nozzle head so as to retain a channel for the liquid fuel in said nozzle part in a closed state.

7.  The fuel cartridge for the fuel cell according to claim 6,
    wherein the elastic member has a metal spring having a surface subjected to passivation processing.

8.  The fuel cartridge for the fuel cell according to claim 6,
    wherein the elastic member has a metal spring having a surface coated with gold.

9.  The fuel cartridge for the fuel cell according to claim 1,
    wherein said nozzle part comprises an elastic member constituted of an elastomer having compression set in the range of 1 to 80 and hardness (type A) in the range of 40 to 70, and limit in operating hours of 10000 or longer in a performance test of the fuel cell.

10. A fuel cell, comprising:

    the fuel cartridge for the fuel cell according to claim 1; and
    a fuel cell body comprising a fuel containing unit having a socket part coupled detachably to the nozzle part of said fuel cartridge, the socket part having a valve mechanism inside, and an electromotive unit supplied with the liquid fuel from the fuel containing unit to generate electric power.

11. The fuel cell according to claim 10,
wherein the spherical portion of the nozzle part of said fuel cartridge has a spherical surface with a curvature equal to or smaller than a virtual circle, which has a center at a position on the nozzle part to contact the socket part when a bending load is applied to said fuel cartridge coupled to said fuel cell body, and a radius from the center to a nearest position on the socket part to interfere in detachment of the nozzle part.

12. The fuel cell according to claim 10,
wherein the nozzle head of said fuel cartridge has a narrow portion provided at a root of the insertion portion.

13. The fuel cell according to claim 10,
wherein the nozzle part of said fuel cartridge has a resin part which deforms so as to detach from the socket part when a bending load is applied to said fuel cartridge coupled to the socket part of said fuel cell body.

14. The fuel cell according to claim 10,
wherein the socket part comprises a socket body provided on the fuel containing unit, the valve mechanism arranged in the socket main body, and an elastic body holder arranged in the socket body and sealing a channel for the liquid fuel when the valve mechanism is released.

15. The fuel cell according to claim 14,
wherein the elastic body holder has a curved-surface recess portion which contacts the spherical portion provided on a tip of the insertion portion of the nozzle head.

16. The fuel cell according to claim 14,
wherein the valve mechanism in the socket part comprises a valve having a valve head and a valve stem, and an elastic member pressing the valve head to a valve sheet provided in the socket body so as to retain a channel for the liquid fuel in the socket part in a closed state, and the elastic body holder is arranged on an outer periphery side of the valve stem.

17. The fuel cell according to claim 10,
wherein the nozzle part has a cam portion provided so as to slope in a peripheral direction thereof, the socket part has a cam follower portion corresponding to the cam portion, and when an excessive rotational force is applied to said fuel cartridge, a coupling state of the nozzle part and the socket part is released based on the cam portion and the cam follower portion.

18. The fuel cell according to claim 17,
wherein the cam portion and the cam follower portion have shapes corresponding to the liquid fuel, and only when the nozzle part of said fuel cartridge containing the liquid fuel corresponding to said fuel cell body is coupled to the socket part, the cam portion and the cam follower portion engage with each other.

19. The fuel cell according to claim 17,
wherein the cam portion is provided along a peripheral surface of the insertion portion of the nozzle head.

20. The fuel cell according to claim 10,
wherein the socket part comprises an elastic member constituted of an elastomer having compression set in the range of 1 to 80 and hardness (type A) in the range of 40 to 70, and limit in operating hours of 10000 or longer in a performance test of the fuel cell.

21. A coupler, comprising:

a socket having a first valve element and a first biasing member biasing the first valve element in a closing direction; and
a plug having a second valve element and a second biasing member biasing the second valve element in a closing direction, said plug engaged with and coupled to said socket detachably, wherein the first and second valve elements are released and brought into communication in a state that said socket and said plug are engaged with and coupled to each other; and

wherein in a state that a projecting coupling portion of said plug is coupled to a plug coupling hole of said socket, at least one of said socket and said plug can be slanted and removed with the projecting coupling portion of said plug being located within an interference prevention space, which is a space formed by rotating a virtual circle about said plug, the virtual circle having a center at an outermost peripheral point on a coupling surface of the projecting coupling portion of said plug and a radius from the center to an intersection point of a lower end circumference of the plug coupling hole of said socket and a diagonal position of the center.

22. The coupler according to claim 21,
wherein a tip portion outer periphery of the projecting coupling portion of said plug is formed by a portion of a spherical surface located within the interference prevention space.

23. The coupler according to claim 21,
wherein the portion of the projecting coupling portion of said plug is formed by projecting into a second interference prevention space formed by multiplying a radius of the interference prevention space by 1.2 and is constructed to be capable of being slanted and removed by elastic deformation.

24. The coupler according to claim 21,
wherein one of said socket and said plug has a cam portion sloping substantially in a circumference direction with an engaging and coupling direction being a center, the other one of said socket and said plug has a cam follower portion which does not contact the cam portion until the engaging and coupling state, and
wherein the coupling is released by an excessive rotational force, and the cam portion and the cam follower portion can be removed with at least one of the cam portion and the cam follower portion being slanted.

25. The coupler according to claim 21, further comprising an identification member which allows engagement and coupling of only said plug and said socket in a pair.

26. A coupler, comprising:

a socket having a first valve element and a first biasing member biasing the first valve element in a closing direction; and
a plug having a second valve element and a second biasing member biasing the second valve element in a closing direction, said plug engaged with and coupled to said socket detachably, wherein the first and second valve elements are released and brought into communication in a state that said socket and said plug are engaged with and coupled to each other; and

wherein a narrow portion is formed in said plug, and in a state that a projecting coupling portion of said plug is coupled to a plug coupling hole of said socket, when at least one of said socket and said plug is slanted about an outermost peripheral point on a coupling surface of the projecting coupling portion of said plug, the narrow portion prevents interference with an internal cylinder lower end of the plug coupling hole of said socket, the internal cylinder lower end projecting toward said plug side further than the coupling surface of the plug coupling hole of said socket, and at least one of said socket and said plug can be slanted and removed.

27. The coupler according to claim 26,
wherein in a state that a projecting coupling portion of said plug is coupled to a plug coupling hole of said socket, at least one of said socket and said plug can be slanted and removed with the projecting coupling portion of said plug being located within an interference prevention space, which is a space formed by rotating a virtual circle about said plug, the virtual circle having a center at an outermost peripheral point on a coupling surface of the projecting coupling portion of said plug and a radius from the center to an intersection point of a lower end circumference of the plug coupling hole of said socket and a diagonal position of the center.

28. The coupler according to claim 26,
wherein a tip portion outer periphery of the projecting coupling portion of said plug is formed by a portion of a spherical surface located within the interference prevention space.

29. The coupler according to claim 26,
wherein one of said socket and said plug has a cam portion sloping substantially in a circumference direction with an engaging and coupling direction being a center, the other one of said socket and said plug has a cam follower portion which does not contact the cam portion until the engaging and coupling state, and

wherein the coupling is released by an excessive rotational force, and the cam portion and the cam follower portion can be removed with at least one of the cam portion and the cam follower portion being slanted.

30. The coupler according to claim 26, further comprising an identification member which allows engagement and coupling of only said plug and said socket in a pair.

# FIG. 1

# FIG. 2

# FIG. 3

# FIG. 4

# FIG. 5

# FIG. 6

# FIG. 7

# FIG. 8

# FIG. 9

32a

32

# FIG. 10

12

13

16

18

14

32a

15

32

# FIG. I I

# FIG. I2

# FIG. 13

# FIG. 14

# FIG. 15

# FIG. 16

# FIG. 17

# FIG. 18

# FIG. 19

# FIG. 20

# FIG. 21

# FIG. 22

# FIG. 23

# FIG. 24

# FIG. 25

# FIG. 26

# FIG. 27

A - O - B

# FIG. 28

# FIG. 29

# FIG. 30

# FIG. 31

# FIG. 32

# FIG. 33

# FIG. 34

# FIG. 35

A - O - B

# FIG. 36

## INTERNATIONAL SEARCH REPORT

| | International application No. |
|---|---|
| | PCT/JP2007/000008 |

A. CLASSIFICATION OF SUBJECT MATTER
*H01M8/04*(2006.01)i, *H01M8/10*(2006.01)n

According to International Patent Classification (IPC) or to both national classification and IPC

B. FIELDS SEARCHED

Minimum documentation searched (classification system followed by classification symbols)
H01M8/04, H01M8/10

Documentation searched other than minimum documentation to the extent that such documents are included in the fields searched
Jitsuyo Shinan Koho         1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-127824 A  (Hitachi Maxell, Ltd.), 22 April, 2004 (22.04.04), Par. Nos. [0016] to [0071]; all drawings (Family: none) | 1-30 |
| A | JP 2003-142135 A  (Hewlett-Packard Co.), 16 May, 2003 (16.05.03), Par. Nos. [0020] to [0029] & EP 1306917 A2         & US 2003/0082427 A1 | 1-30 |
| P,A | JP 2006-286364 A  (Toshiba Corp.), 19 October, 2006 (19.10.06), Full text (Family: none) | 1-30 |

☐  Further documents are listed in the continuation of Box C.      ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 March, 2007 (07.03.07) | 20 March, 2007 (20.03.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3413111 B
- JP 2004171844 A
- JP 2004127824 A
- JP 2003172487 A